# EUROPÄISCHE PATENTANMELDUNG

(11) **EP 4 335 348 A2**
(43) Veröffentlichungstag der Anmeldung: **13.03.2024**
(21) Anmeldenummer: 23205460.1
(22) Anmeldetag: 26.07.2016
(51) Int. Cl.: A47L 13/42

(54) **REINIGUNGSSYSTEM UND VERFAHREN ZUR REINIGUNG VON FLÄCHEN VON RÄUMEN**

(62) Teilanmeldung aus: 16744379.5
(71) Anmelder: Alfred Kärcher SE & Co. KG, 71364 Winnenden (DE)
(72) Erfinder: Brückner, Jörg, 71364 Winnenden (DE); Walz, Jürgen, 71364 Winnenden (DE); Schneider, Saskia, 71364 Winnenden (DE); Prasser, Patrick, 71364 Winnenden (DE); Kohler, Norman, 71364 Winnenden (DE); Kuhnle, Katharina, 71364 Winnenden (DE)
(74) Vertreter: DTS Patent- und Rechtsanwälte Schnekenbühl und Partner mbB

(57) **Zusammenfassung**

Die Erfindung betrifft ein Reinigungssystem zur Reinigung von Flächen und insbesondere Böden von Räumen, umfassend mindestens ein von einem Benutzer (18) handgeführtes Reinigungsgerät (20, 112) und mehrere Reinigungselemente (42, 122), wobei an dem mindestens einen Reinigungsgerät (20, 112) ein Reinigungselement (42, 122) austauschbar halterbar ist, eine Lokalisierungseinrichtung (48) zum Feststellen, wenn der Benutzer (18) mit dem mindestens einen Reinigungsgerät (20, 112) von einem Raum (12) in einen weiteren Raum (12) wechselt oder gewechselt ist, und eine mit dieser gekoppelte Hinweiseinheit (68) zum Bereitstellen eines Hinweises für den Benutzer (18), das Reinigungselement (42, 122) am mindestens einen Reinigungsgerät (20, 112) auszutauschen. Au-ßerdem betrifft die Erfindung ein Verfahren.

## Beschreibung

Die Erfindung betrifft ein Reinigungssystem zur Reinigung von Flächen und insbesondere Böden von Räumen, umfassend mindestens ein von einem Benutzer handgeführtes Reinigungsgerät und mehrere Reinigungselemente, wobei an dem mindestens einen Reinigungsgerät ein Reinigungselement austauschbar halterbar ist.

Außerdem betrifft die Erfindung ein Verfahren zur Reinigung von Flächen und insbesondere Böden von Räumen mit einem derartigen Reinigungssystem.

Bei einem Reinigungssystem der eingangs genannten Art führt ein Benutzer das mindestens eine Reinigungsgerät zum Reinigen von Flächen zu reinigender Räume mit der Hand. Als zu reinigende Flächen kommen vorliegend insbesondere Böden in Betracht, die Reinigung kann sich jedoch auch auf andersartige Oberflächen erstrecken. Beispiele hierfür sind Oberflächen von Mobiliar, Einrichtungsgegenständen, Wänden, Türen oder Fenstern der Räume. Zur Schmutzaufnahme kommen beim Reinigungssystem Reinigungselemente zum Einsatz. Im Fall einer Verschmutzung kann der Benutzer das Reinigungselement vom Reinigungsgerät lösen und gegen ein weiteres, unverschmutztes Reinigungselement austauschen. Die Reinigung kann eine Feuchtreinigung oder eine Trockenreinigung sein. Das Reinigungssystem kann eine Mehrzahl von Reinigungsgeräten aufweisen.

Unter einem "Raum" wird vorliegend insbesondere ein von definierten oder definierbaren Begrenzungen oder Markierungen eingefasster Bereich verstanden. Die Begrenzungen können physisch sein und insbesondere Wände aufweisen, in denen Durchgänge, offen oder verschließbar, zwischen benachbarten Räumen vorgesehen sein können. Auch nicht-physische Begrenzungen des Raumes sind möglich. Insbesondere kann vorliegend allerdings unter einem "Raum" eine Örtlichkeit im Sinne von "Zimmer", "Büroraum", "Flur", "Korridor", "Saal", ... verstanden werden. Nach dem Gesagten kann vorliegend jedoch auch ein Abschnitt einer solchen Örtlichkeit als "Raum" angesehen werden. Der "Raum" kann für Aufenthalts- und/oder Nutzzwecke vorgesehen sein, für Wohnzwecke und/oder andere Zwecke. Diese Aufzählung ist beispielhaft.

Ein Reinigungssystem der eingangs genannten Art wird beispielsweise von einem Reinigungsunternehmen oder einer Reinigungsabteilung einer Einrichtung oder eines Unternehmens eingesetzt. Es kann vorgesehen sein, dass das Reinigungsunternehmen oder die Reinigungsabteilung bestimmten Auflagen unterliegt, um eine ordnungsgemäße Reinigung von Räumen sicherzustellen. Auflagen können sich durch Gesetz oder Verordnung, Richtlinien des Auftraggebers oder selbstgesetzte Standards ergeben. Wünschenswert wäre es sicherzustellen, dass Auflagen nach Möglichkeit eingehalten werden.

Aufgabe der vorliegenden Erfindung ist es, ein Reinigungssystem und ein Verfahren zur Reinigung von Flächen von Räumen bereitzustellen, bei dem eine ordnungsgemäße Reinigung von Räumen sichergestellt werden kann.

Diese Aufgabe wird erfindungsgemäß durch ein Reinigungssystem zur Reinigung von Flächen und insbesondere Böden von Räumen gelöst, umfassend mindestens ein von einem Benutzer handgeführtes Reinigungsgerät und mehrere Reinigungselemente, wobei an dem mindestens einen Reinigungsgerät ein Reinigungselement austauschbar halterbar ist, eine Lokalisierungseinrichtung zum Feststellen, wenn der Benutzer mit dem mindestens einen Reinigungsgerät von einem Raum in einen weiteren Raum wechselt oder gewechselt ist, und eine mit dieser gekoppelte Hinweiseinheit zum Bereitstellen eines Hinweises für den Benutzer, das Reinigungselement am mindestens einen Reinigungsgerät auszutauschen.

Beim erfindungsgemäßen Reinigungssystem kann unter Einsatz einer Lokalisierungseinrichtung festgestellt werden, wenn ein Benutzer von einem Raum in einen anderen Raum gewechselt ist oder im Begriff ist, dies zu tun. Bei Feststellen eines Raumwechsels kann dem Benutzer des mindestens einen Reinigungsgerätes ein Hinweis bereitgestellt werden, dass das Reinigungselement ausgetauscht werden sollte. Der Benutzer kann das in dem zuletzt gereinigten Raum verschmutzte Reinigungselement vom Reinigungsgerät lösen und ein unbenutztes Reinigungselement am Reinigungsgerät anbringen, um den folgenden Raum zu reinigen. Das erfindungsgemäße Reinigungssystem bietet dadurch die Möglichkeit, ortsbasiert einen Benutzer auf erforderliche Täusche von Reinigungselementen hinzuweisen. Das Reinigungssystem eignet sich daher insbesondere dazu, Auflagen an die Reinigung zu gewährleisten, bei denen Räume jeweils mit unterschiedlichen Reinigungselementen zu reinigen sind. Derartige Auflagen existieren beispielsweise bei Reinigungsaufgaben im Gesundheitsbereich für ärztliche und pflegerische Einrichtungen. Zum Beispiel können bei der manuellen Reinigung von Böden in Krankenhäusern, Sanatorien oder dergleichen Auflagen dahingehend existieren, dass zur Reinigung eines jeweiligen Raumes ein sauberes, unbenutztes Reinigungselement einzusetzen ist, um die Gefahr einer Verschleppung von Keimen durch fortwährend eingesetzte Reinigungselemente zu minimieren. Die erforderliche Anzahl von Reinigungselementen kann der Benutzer mit sich führen, oder in einem jeweiligen Raum können Reinigungselemente deponiert sein.

Im Rahmen der vorliegenden Erfindung kann vorgesehen sein, dass anhand der Lokalisierungseinrichtung feststellbar ist, dass der Benutzer von einem Raum in einen weiteren Raum wechselt, wobei die Identität des Raumes nicht unbedingt bekannt sein muss. Weiter ist denkbar, dass mittels der Lokalisierungseinrichtung feststellbar ist, dass der Benutzer in einen weiteren Raum wechselt, wobei die Identität der Räume bekannt ist. Es ist für die Erfindung auch vorbehalten, dass in letzterem Fall feststellbar ist, wo in zumindest einem und vorzugsweise einem jeweiligen Raum sich der Benutzer mit dem Reinigungsgerät befindet. Auf diese bevorzugten Ausführungsformen der vorliegenden Erfindung wird nachfolgend noch näher eingegangen.

Es kann vorgesehen sein, dass das mindestens eine Reinigungsgerät ein Flachwischer ist und dass die Reinigungselemente Wischbezüge für den Flachwischer sind.

Es kann vorgesehen sein, dass das mindestens eine Reinigungsgerät ein Wischmopp ist und dass die Reinigungselemente Wischköpfe für den Wischmopp sind.

Es kann vorgesehen sein, dass das Reinigungssystem eine Mehrzahl von gleichartigen und/oder eine Mehrzahl von andersartigen Reinigungsgeräten aufweist.

Als vorteilhaft erweist es sich, wenn das mindestens eine Reinigungsgerät die Hinweiseinheit umfasst. Eine gesonderte Hinweiseinheit, die durch einen Benutzer mitzuführen ist, kann dadurch vermieden werden.

Bei einer andersartigen vorteilhaften Ausführungsform kann alternativ oder ergänzend eine vom mindestens einen Reinigungsgerät getrennte Hinweiseinheit vorgesehen sein. Möglich ist zum Beispiel, dass als Hinweiseinheit ein vom Benutzer tragbares Gerät als Hinweiseinheit dient, eine solche umfasst oder bildet, beispielsweise ein Smartphone oder eine Smartwatch. Hinweise können alternativ oder ergänzend an einer Hinweiseinheit einer Aufsichtsperson (zum Beispiel Vorarbeiter des Benutzers) bereitgestellt werden.

Die Hinweiseinheit kann zumindest eines der Folgenden umfassen oder nach einem der Folgenden ausgestaltet sein:
- eine Anzeigeeinheit zum Ausgeben eines optischen Hinweises, beispielsweise eine Leucht-, Blink- oder Textanzeige;
- eine Geräuscheinheit zum Ausgeben eines akustischen Hinweises;
- eine Vibrationseinheit zum Ausgeben eines haptischen Hinweises, insbesondere durch Vibration eines Griffelementes des mindestens einen Reinigungsgerätes.

Bei einer vorteilhaften Umsetzung des Reinigungssystems kann vorgesehen sein, dass das mindestens eine Reinigungsgerät eine Halteeinheit zum Haltern des Reinigungselementes am Reinigungsgerät umfasst und dass die Halteeinheit die Hinweiseinheit ausbildet, wobei die Halteeinheit als Hinweis zum Freigeben des Reinigungselementes ansteuerbar ist. Beispielsweise kann eine Steuereinheit des Reinigungsgerätes die Halteeinheit ansteuern, woraufhin diese freigegeben wird, so dass sich das Reinigungselement vom Reinigungsgerät löst. Der Benutzer kann dies als Hinweis auffassen, das Reinigungselement auszutauschen.

Alternativ oder ergänzend kann vorgesehen sein, dass das mindestens eine Reinigungsgerät ein Griffelement, eine Halteeinheit zum Haltern des Reinigungselementes und eine diese verbindende Gelenkeinheit aufweist und dass die Gelenkeinheit die Hinweiseinheit ausbildet, wobei die Gelenkeinheit als Hinweis zum Blockieren ansteuerbar ist. Das Blockieren der Gelenkeinheit und damit die Einschränkung des mindestens einen Reinigungsgerätes in seiner Funktionalität kann vom Benutzer als Hinweis dahingehend verstanden werden, das Reinigungselement auszutauschen.

Von Vorteil ist es, wenn der Hinweis erst nach Ablauf einer vorgegebenen oder vorgebbaren Zeitverzögerung der Feststellung bereitstellbar ist oder wenn der Hinweis erst bereitstellbar ist, wenn der Benutzer für eine vorgegebene oder vorgebbare Zeitdauer in den weiteren Raum gewechselt ist. Bewegt sich der Benutzer mit dem Reinigungsgerät nur vorübergehend an eine Grenze eines Raumes zu einem weiteren Raum oder betritt diesen weiteren Raum, wird ein gewissermaßen "verfrühter" Hinweis vermieden, das Reinigungselement auszutauschen. Entsprechendes gilt dann, wenn der Benutzer irrtümlich den weiteren Raum betritt. Stattdessen kann bei der vorliegenden Ausführungsform vorgesehen sein, dass zunächst für eine Zeitdauer überwacht wird, ob der Benutzer tatsächlich in den weiteren Raum gewechselt ist, und ein Hinweis zum Tausch des Reinigungselementes wird erst anschließend ausgegeben.

Günstigerweise ist mittels der Lokalisierungseinrichtung die Anwesenheit des mindestens einen Reinigungsgerätes in einem jeweiligen Raum ermittelbar. Dadurch kann nicht nur festgestellt werden, dass der Benutzer mit dem Reinigungsgerät von einem Raum in einen weiteren wechselt, es ist auch feststellbar, in welchem bestimmten Raum sich der Benutzer mit dem Reinigungsgerät befindet.

Von Vorteil ist es, wenn mittels der Lokalisierungseinrichtung die Position des mindestens einen Reinigungsgerätes innerhalb zumindest eines bestimmten Raumes und vorzugsweise innerhalb eines beliebigen der Räume ermittelbar ist, wobei in einer Speichereinheit des Reinigungssystems Informationen über die Räume hinterlegt sind. Vorteilhafterweise kann die Position in einem jeweiligen Raum mittels der Lokalisierungseinrichtung festgestellt werden. In der Speichereinheit ist beispielsweise eine Karte der Räume hinterlegt, wobei die Position des mindestens einen Reinigungsgerätes innerhalb der Karte ermittelbar ist.

Vorzugsweise ist vorgesehen, dass die Position des mindestens einen Reinigungsgerätes in einem relativen Bezugssystem ermittelbar ist. Das relative Bezugssystem ist bei einer vorteilhaften Umsetzung von in den Räumen angeordneten Lokalisierungselementen der Lokalisierungseinrichtung zum Erfassen des mindestens einen Reinigungsgerätes definiert. Anhand der Daten der Lokalisierungselemente kann die Position des Reinigungsgerätes im relativen Bezugssystem festgestellt werden. Alternativ oder ergänzend kann das relative Bezugssystem oder ein andersartiges relatives Bezugssystem durch Positionslandmarken definiert sein, die durch das mindestens eine Reinigungsgerät erfassbar sind.

Es kann vorgesehen sein, dass das mindestens eine Reinigungsgerät die Speichereinheit umfasst.

Alternativ oder ergänzend kann vorgesehen sein, dass eine extern zum mindestens einen Reinigungsgerät angeordnete Speichereinheit vorgesehen ist, wobei das mindestens eine Reinigungsgerät mit der externen Speichereinheit in Kommunikation steht. Dies ist insbesondere dann von Vorteil, wenn eine Mehrzahl von Reinigungsgeräten vorhanden ist, die jeweils mit der Speichereinheit direkt oder indirekt in Kommunikation stehen. Die Informationen über die Räume, beispielsweise die Karte, brauchen nicht in jedem der Reinigungselemente gespeichert zu sein.

Als günstig erweist sich die Bestimmung der Position des mindestens einen Reinigungsgerätes im Raum mit einer Genauigkeit von weniger als 1m, vorzugsweise weniger als 50cm und noch bevorzugter von weniger als 25cm.

Bei einer vorteilhaften Umsetzung des Reinigungssystems ist vorgesehen, dass eine vom Benutzer mit dem mindestens einen Reinigungsgerät zurückgelegte Strecke oder überstrichene Fläche innerhalb des Raumes ermittelbar ist und bei Überschreiten einer vorgegebenen oder vorgebbaren Strecke oder Fläche ein Hinweis für den Benutzer an der Hinweiseinheit ausgebbar ist, das Reinigungselement am mindestens einen Reinigungsgerät auszutauschen. Zusätzlich zum Tausch des Reinigungselementes beim Wechsel von einem Raum in einen weiteren Raum kann die vorliegende Erfindung vorsehen, dass über die Bestimmung der Position des Reinigungsgerätes in einem Raum die Strecke oder Fläche des (Benutzers mit dem) Reinigungsgerätes im Raum festgestellt wird. Erforderlichenfalls, insbesondere bei großen Räumen, kann durch einen entsprechenden Hinweis eine Aufforderung an den Benutzer ergehen, das Reinigungsgerät auch innerhalb des Raumes auszutauschen.

Alternativ oder ergänzend ist es günstig, wenn ein Wechseln des Benutzers mit dem mindestens einen Reinigungsgerät von einem ersten Raumbereich in einen von diesem unterscheidbaren zweiten Raumbereich eines Raumes feststellbar ist und wenn bei positiver Feststellung ein Hinweis für den Benutzer an der Hinweiseinheit ausgebbar ist, das Reinigungselement am mindestens einen Reinigungsgerät auszutauschen. Beispielsweise kann eine Auflage für die Reinigung dahingehend vorhanden sein, dass ein bestimmter Raum unterschiedliche Raumbereiche aufweist, die voneinander abgrenzbar und dadurch für sich definiert sind, wobei diese mit unterschiedlichen Reinigungselementen zu reinigen sind. Innerhalb eines Raumes kann in diesem Fall ein Tausch des Reinigungselementes erforderlich sein, und der Benutzer kann einen entsprechenden Hinweis erhalten.

Wie bereits vorstehend angedeutet, kann das erfindungsgemäße Reinigungssystem zum Lokalisieren des Reinigungsgerätes eine Fremdortung unter Einsatz von Lokalisierungselementen ermöglichen und/oder eine Selbstortung des Reinigungselementes unter Einsatz von Positionslandmarken.

Bei einer vorteilhaften Umsetzung des Reinigungssystems ist vorgesehen, dass die Lokalisierungseinrichtung Lokalisierungselemente aufweist, wobei einem jeweiligen Raum mindestens ein Lokalisierungselement zugeordnet oder zuordenbar ist, zum Erfassen der Anwesenheit des mindestens einen Reinigungsgerätes im Raum, und eine mit diesen gekoppelte Datenverarbeitungseinheit extern zum mindestens einen Reinigungsgerät.

Günstigerweise ist von der Datenverarbeitungseinheit anhand der Daten der Lokalisierungselemente feststellbar, dass der Benutzer mit dem mindestens einen Reinigungsgerät von einem Raum in einen weiteren Raum wechselt oder gewechselt ist, und ein diesbezügliches Raumwechselsignal ist an die Hinweiseinheit oder an das mindestens eine Reinigungsgerät übertragbar. Mittels der Lokalisierungselemente kann das Reinigungsgerät geortet und ein Raumwechsel von der Datenverarbeitungseinheit festgestellt werden. Die Hinweiseinheit kann zum Ausgeben des Hinweises angesteuert werden, wobei ein Raumwechselsignal beispielsweise an ein die Hinweiseinheit umfassendes Reinigungsgerät übermittelt werden kann.

Bei einer weiteren vorteilhaften Umsetzung des Reinigungssystems kann vorgesehen sein, dass von der Datenverarbeitungseinheit eine Positionsinformation basierend auf den Daten der Lokalisierungselemente ermittelbar und an das mindestens eine Reinigungsgerät übertragbar ist, wobei in einer Steuereinheit des mindestens einen Reinigungsgerätes feststellbar ist, dass der Benutzer mit dem mindestens einen Reinigungsgerät von einem Raum in einen weiteren Raum wechselt oder gewechselt ist. Bei einer derartigen Ausführungsform kann die Steuereinheit beispielsweise Informationen über die Räume in einer Speichereinheit auslesen, zum Beispiel kann die Position des Reinigungsgerätes in einer in der Speichereinheit hinterlegten Karte der Räume festgestellt werden. Die Feststellung dass der Raum gewechselt wird oder wurde, kann auf diese Weise auch im Reinigungsgerät getroffen werden.

Günstig ist es, wenn die Lokalisierungselemente Funkelemente sind, die mit einem Sende- und/oder Empfangselement des mindestens einen Reinigungsgerätes zusammenwirken. Die Lokalisierungselemente können Funk-Landmarken sein, die vom Sende- und/oder Empfangselement ausgesandte oder zurückgesandte Strahlung empfangen, um das Reinigungsgerät zu orten. Alle möglichen dem Fachmann geläufige Arten von Funkverbindungen sind denkbar.

Bei einer andersartigen vorteilhaften Ausführungsform kann alternativ oder ergänzend vorgesehen sein, dass die Lokalisierungselemente Kameras sind oder umfassen, über welche das Reinigungsgerät optisch in einem jeweiligen Raum erfasst werden kann.

Bei einer andersartigen vorteilhaften Ausführungsform kann alternativ oder ergänzend vorgesehen sein, dass die Lokalisierungselemente Ultraschallelemente zur Ultraschallortung und/oder Infrarotelemente zur Infrarotortung des mindestens einen Reinigungsgerätes sind oder umfassen. Diese können Ultraschallstrahlung bzw. Infrarotstrahlung aussenden und/oder empfangen. Am oder im mindestens einen Reinigungsgerät kann ein Sende- und/oder Empfangselement für Ultraschallstrahlung bzw. Infrarotstrahlung vorhanden sein.

Auch magnetische Lokalisierungselemente sind denkbar, zur magnetischen Ortung des mindestens einen Reinigungsgerätes.

Eine weitere vorteilhafte Ausführungsform des Reinigungssystems sieht vor, dass die Lokalisierungseinrichtung eine Sensoreinheit im mindestens einen Reinigungsgerät umfasst, mit der Positionslandmarken erfassbar sind, wobei einem jeweiligen Raum mindestens eine Positionslandmarke zugeordnet ist, wobei von einer mit der Sensoreinheit gekoppelten Steuereinheit des mindestens einen Reinigungsgerätes anhand der erfassten Positionslandmarken feststellbar ist, dass der Benutzer mit dem mindestens einen Reinigungsgerät von einem Raum in einen weiteren Raum wechselt oder gewechselt ist. Auf diese Weise kann eine Selbstortung des Reinigungsgerätes erfolgen, ohne dass hierfür Lokalisierungselemente und eine externe Datenverarbeitungseinheit erforderlich sind.

Die Sensoreinheit kann beispielsweise eine Nahbereichserfassungseinheit sein oder bilden, die mit den Positionslandmarken nur zusammenwirkt, wenn der Abstand des mindestens einen Reinigungsgerätes geringer ist als ein Schwellenabstand. Dies bietet sich zum Beispiel dann an, wenn lediglich ein Wechsel von einem Raum in einen weiteren Raum erfasst werden soll, die Identität des Raumes aber von untergeordneter Bedeutung ist (dies kann gleichwohl dennoch vorgesehen sein). Nähert sich das mindestens eine Reinigungsgerät den Positionslandmarken, werden diese von der Sensoreinheit erfasst, und ein diesbezüglicher Raumwechsel kann dem Benutzer signalisiert werden.

Beispielsweise sind die Positionslandmarken an oder im Bereich von Übergängen, insbesondere Türen oder Schwellen, zwischen aneinander grenzenden Räumen positioniert oder positionierbar.

Die Sensoreinheit kann bei einer vorteilhaften Umsetzung des Reinigungssystems eine Funk-Sensoreinheit sein, wobei die Positionslandmarken vorzugsweise zumindest eines der Folgenden sind oder umfassen:
- Bluetooth-Landmarken;
- UWB-Landmarken (Ultrawideband-Landmarken);
- RFID-Landmarken. Beispielsweise können RFID-Transponder oder-Tags im Bereich von Übergängen zwischen Räumen wie vorstehend erläutert angeordnet sein und werden von der als Nahbereichserfassungseinheit ausgestalteten Sensoreinheit erfasst.

Alle möglichen dem Fachmann geläufige Arten von Funk-Sensoreinheiten sind denkbar.

Bei einer andersartigen Umsetzung des Reinigungssystems ist es günstig, wenn die Sensoreinheit eine optische Sensoreinheit ist und/oder eine magnetische Sensoreinheit zum optischen/magnetischen Erfassen der Positionslandmarken. Als optische Positionslandmarken können dabei charakteristische Merkmale eines jeweiligen Raumes herangezogen werden, die von einer optischen Sensoreinheit erfasst werden und anhand einer Karte der Räume zur Bestimmung der Position des Reinigungsgerätes ausgewertet werden können.

Günstig ist es, wenn die Lokalisierungseinrichtung eine Sensoreinheit im mindestens einen Reinigungsgerät umfasst zum Bereitstellen einer absoluten Positionsinformation und darauf basierender Ermittlung der Position des mindestens einen Reinigungsgerätes durch eine Steuereinheit, wobei in einer Speichereinheit des Reinigungssystems Informationen über die Räume mit absoluter Positionsinformation hinterlegt sind, insbesondere mittels einer Karte.

Von Vorteil ist es, wenn das Reinigungssystem mindestens eine Sensoreinheit umfasst zum Erfassen, dass ein Reinigungselement am mindestens einen Reinigungsgerät angebracht ist oder angebracht wird, wobei insbesondere ein Austausch eines Reinigungselementes gegen ein weiteres Reinigungselement erkennbar ist. Basierend auf einem Signal der Sensoreinheit kann beispielsweise einem Benutzer ein Hinweis über den erfolgten Tausch des Reinigungselementes bereitgestellt werden, oder eine entsprechende Information kann zur Dokumentation des Reinigungsauftrags gespeichert werden, worauf nachfolgend noch eingegangen wird.

Vorteilhafterweise umfasst das mindestens eine Reinigungsgerät die mindestens eine Sensoreinheit. Eine gesonderte Sensoreinheit, die beispielsweise von dem Benutzer mitzuführen ist, kann dadurch eingespart werden. Vorzugsweise umfasst ein jeweiliges Reinigungsgerät eine Sensoreinheit.

Um festzustellen, dass ein unbenutztes, sauberes Reinigungselement am mindestens einen Reinigungsgerät angebracht ist oder wird kann zum Beispiel vorgesehen sein, dass mit der Sensoreinheit anhand der Masse und/oder anhand einer Feuchte des Reinigungselementes ein Tausch des Reinigungselementes erkennbar ist.

Eine vorteilhafte Umsetzung des Reinigungssystems sieht vor, dass die Sensoreinheit eine Funk-Sensoreinheit ist und dass die Reinigungselemente auf Basis einer RFID-Technologie erkennbar sind, wobei die Reinigungselemente jeweils ein von der Sensoreinheit erkennbares Funkglied aufweisen. Das Funkglied ist vorzugsweise ein RFID-Transponder oder RFID-Tag, das von der ein RFID-Lesegerät umfassenden oder bildenden Sensoreinheit erkannt werden kann. Auch die Nutzung von NFC im Rahmen der RFID-Technologie ist denkbar. Dies bietet sich beispielsweise aufgrund der geringen Reichweite der NFC-Kopplung an, um die Nähe des Reinigungselementes zu dem die Sensoreinheit aufweisenden Reinigungsgerät festzustellen.

Günstig ist es, wenn in einem Speicherglied eines jeweiligen Reinigungselementes eine diesem zugeordnete Identifikationsnummer hinterlegt ist und wenn in einer mit der mindestens einen Sensoreinheit gekoppelten Speichereinheit des Reinigungssystems Informationen über die Reinigungselemente anhand deren Identifikationsnummern unterscheidbar gespeichert sind. Das Funkglied kann das Speicherglied umfassen oder bilden. Jedem Reinigungselement kann eine bevorzugt individuelle Identifikationsnummer zugeordnet sein. Die Identifikationsnummer kann von der Sensoreinheit aus dem Speicherglied gelesen werden. Dies erlaubt es, ein jeweiliges Reinigungselement anhand von Informationen in der Speichereinheit zu identifizieren.

Insbesondere wird ein RFID-Transponder oder RFID-Tag mit identifizierbarer Identifikationsnummer als Funkglied mit Speicherglied angesehen.

Es kann eine extern zum mindestens einen Reinigungsgerät angeordnete Speichereinheit vorgesehen sein. Die beispielsweise im Reinigungsgerät angeordnete Sensoreinheit kann mit der externen Speichereinheit in Kommunikation stehen, um nach dem Auslesen der Identifikationsnummer erforderlichenfalls Informationen aus der Speichereinheit zu lesen oder an diese zu übertragen.

Alternativ oder ergänzend kann vorgesehen sein, dass ein jeweiliges Reinigungsgerät eine Speichereinheit umfasst, wobei auch in diesem Fall der Inhalt der Speichereinheit gelesen oder Daten an diese übertragen werden können. Vorteilhafterweise ist der Inhalt der Speichereinheit mit einer externen, zusätzlichen Speichereinheit synchronisierbar.

Das Speicherglied des Reinigungselementes ist vorzugsweise von einem Funkglied desselben umfasst, beispielsweise einem RFID-Transponder oder RFID-Tag. Denkbar ist jedoch auch ein optisch auslesbares Speicherglied, zum Beispiel mittels eines Barcodes oder Matrix-Codes. In diesem Fall kann die Sensoreinheit als optische Sensoreinheit ausgestaltet sein.

Das Auslesen der Identifikationsnummer erfolgt vorzugsweise selbsttätig beim Anbringen des Reinigungselementes am Reinigungsgerät.

Von Vorteil ist es, wenn im Speicherglied und/oder in der Speichereinheit ein Benutzungszustand des jeweiligen Reinigungselementes hinterlegt ist und wenn feststellbar ist, ob das Reinigungselement unbenutzt ist, wobei ein Hinweis an der Hinweiseinheit an den Benutzer betreffend den Benutzungszustand bereitstellbar ist. Es ist denkbar, dass der Benutzer irrtümlich oder wissentlich ein bereits benutztes Reinigungselement am Reinigungsgerät anbringt. Durch Ermitteln und Feststellen des Benutzungszustandes kann der Benutzer darauf hingewiesen werden, dass es sich um ein benutztes Reinigungselement handelt und aufgefordert werden, dieses gegen ein unbenutztes Reinigungselement auszutauschen. Der Benutzungszustand kann im Speicherglied gespeichert sein und von der mindestens einen Sensoreinheit ausgelesen werden. Alternativ oder ergänzend ist denkbar, dass anhand der Identifikationsnummer des Reinigungselementes aus der externen oder vom Reinigungsgerät umfassten Speichereinheit der Benutzungszustand nach der Identifikation des Reinigungselementes ausgelesen werden kann.

"Unbenutzt" kann insbesondere "gereinigt" oder "neu" bedeuten.

Vorteilhafterweise ist bei einer Feststellung, dass das Reinigungselement benutzt ist, ein Hinweis an der Hinweiseinheit ausgebbar, das Reinigungselement zu tauschen. Darauf wurde bereits eingegangen.

Bevorzugt ist bei einer Feststellung, dass das Reinigungselement unbenutzt ist, ein Hinweis an der Hinweiseinheit ausgebbar, dass das mindestens eine Reinigungsgerät bereit für die Reinigung ist. Der Benutzer hält dadurch eine positive belohnende Rückmeldung und kann den weiteren Raum mit dem unbenutzten Reinigungselement reinigen.

Günstig ist es, wenn an die Speichereinheit bei Benutzung des Reinigungselementes eine Information betreffend den Benutzungszustand übermittelbar und mit der Identifikationsnummer des Reinigungselementes verknüpft speicherbar ist, dass das Reinigungselement benutzt wurde. Beispielsweise kann wie vorstehend erläutert das angebrachte Reinigungselement von der mindestens einen Sensoreinheit erkannt und zunächst der Benutzungszustand festgestellt werden. Im Falle eines unbenutzten Reinigungselementes kann der Benutzungszustand in der Speichereinheit auf "benutzt" gesetzt werden. Beim nochmaligen Anbringen des Reinigungselementes kann wie vorstehend erläutert ein Hinweis darüber ausgegeben werden, dass das Reinigungselement bereits benutzt wurde. Die Übermittlung des Benutzungszustandes kann bereits beim Anbringen des Reinigungselementes oder beim Lösen des Reinigungselementes vom Reinigungsgerät übermittelbar sein.

Bevorzugt ist von der mindestens einen Sensoreinheit der Benutzungszustand im Speicherglied dahingehend änderbar, dass das Reinigungselement benutzt wurde.

Von Vorteil ist es, wenn das Reinigungssystem eine Reinigungseinrichtung zum Reinigen der Reinigungselemente umfasst und wenn im Speicherglied und/oder in der Speichereinheit der Benutzungszustand infolge einer Reinigung der Reinigungselemente dahingehend änderbar ist, dass diese als unbenutzt gekennzeichnet werden. Bei einer Reinigung der Reinigungselemente kann der Benutzungszustand auf "unbenutzt" im Speicherglied und/oder in der Speichereinheit zurückgesetzt werden. Bei erneuter Verwendung des Reinigungselementes kann dieser geänderte Benutzungszustand ausgelesen werden.

Es kann eine Steuereinheit im mindestens einen Reinigungsgerät vorgesehen sein zum Feststellen, dass ein Reinigungselement am mindestens einen Reinigungsgerät angebracht wurde, zum Identifizieren des Reinigungselementes anhand der im Speicherglied oder in der Speichereinheit hinterlegten Informationen, zum Ansteuern der Hinweiseinheit und/oder zum Auslösen der Änderung des Benutzungszustandes.

Alternativ oder ergänzend kann eine extern zum mindestens einen Reinigungsgerät angeordnete Datenverarbeitungseinheit vorgesehen sein zum Feststellen, dass ein Reinigungselement am mindestens einen Reinigungsgerät angebracht wurde, zum Identifizieren des Reinigungselementes anhand der im Speicherglied oder in der Speichereinheit hinterlegten Informationen, zum Ansteuern der Hinweiseinheit und/oder zum Auslösen der Änderung des Benutzungszustandes.

Bevorzugt ist die Nutzungsdauer ermittelbar, für welche ein Reinigungselement mit dem mindestens einen Reinigungsgerät benutzt wurde. Die Nutzungsdauer kann zum Beispiel mit der Information über die Benutzung des Reinigungselementes in einem Bericht über die Reinigungstätigkeit veröffentlicht werden.

Die Nutzungsdauer ist beispielsweise beginnend mit dem Anbringen des Reinigungselementes am mindestens einen Reinigungsgerät und endend mit dem Erreichen einer vorgegebenen oder vorgebbaren Zeitdauer ermittelbar. Mit dem Anbringen des Reinigungselementes kann ein Zeitglied in dem mindestens einen Reinigungsgerät in Gang gesetzt werden. Die Zeitdauer entspricht dann der Nutzungsdauer.

Alternativ kann vorgesehen sein, dass die Nutzungsdauer mit dem Anbringen des Reinigungselementes am mindestens einen Reinigungsgerät beginnt und endend mit der Feststellung ermittelbar ist, dass der Benutzer mit dem mindestens einen Reinigungsgerät von einem Raum in einen weiteren Raum wechselt oder gewechselt ist. Die Nutzungsdauer entspricht damit der Zeitdauer vom Anbringen des Reinigungselementes bis zum Raumwechsel.

Vorteilhafterweise ist bei Erreichen der vorgegebenen oder vorgebbaren Nutzungsdauer an der Hinweiseinheit ein Hinweis für den Benutzer bereitstellbar, das Reinigungselement am mindestens einen Reinigungsgerät zu tauschen. So kann beispielsweise die Auflage an die Reinigungstätigkeit vorsehen, dass Reinigungselemente nur für eine maximale Nutzungsdauer eingesetzt werden sollten. Bei Überschreiten der Nutzungsdauer ergeht ein Hinweis zum Tausch des Reinigungselementes an den Benutzer.

Günstig ist es, wenn das Reinigungssystem eine Datenverarbeitungseinheit umfasst zum Ermitteln, welche Räume der Benutzer mit dem mindestens einen Reinigungsgerät aufgesucht hat und/oder zum Ermitteln, dass oder ob der Benutzer das Reinigungselement beim Wechseln von Raum zu Raum jeweils ausgetauscht hat. Für den Fall, dass feststellbar ist, in welchem Raum sich das Reinigungsgerät (mit dem Benutzer) befindet, ist dadurch eine Überwachung oder Kontrolle der Reinigungstätigkeit möglich. Die Datenverarbeitungseinheit kann zumindest die Räume oder Raumbereiche feststellen, in denen das Reinigungsgerät anwesend war und daraus den Rückschluss ziehen, dass diese tatsächlich gereinigt wurden und/oder welche Fläche gereinigt wurde. Vorteilhafterweise wird ermittelt, dass oder ob der Benutzer das Reinigungselement jeweils ausgetauscht hat. Dies erlaubt es, Auflagen an die Reinigungstätigkeit zu überwachen. Die Datenverarbeitungseinheit ist bevorzugt extern zu dem mindestens einen Reinigungsgerät angeordnet und steht vorzugsweise mit der vorstehend genannten Sensoreinheit in Kommunikation, die vorteilhafterweise im mindestens einen Reinigungsgerät angeordnet ist und mit der erfassbar ist, dass ein Reinigungselement am Reinigungsgerät angebracht ist oder wird.

Vorteilhafterweise ist von der Datenverarbeitungseinheit ein Bericht erstellbar, umfassend alle oder einen Teil der Informationen über das Ergebnis der im letzten Absatz genannten Ermittlung, insbesondere eine Information über erfolgten oder ausgebliebenen Tausch der Reinigungselemente auf einen oder ohne einen entsprechenden Hinweis und/oder Information über erfolgte oder ausgebliebene Reinigung.

Es kann vorgesehen sein, dass die Position des mindestens einen Reinigungsgerätes von der Lokalisierungseinrichtung in drei Dimensionen ermittelbar ist und dass im Falle der Feststellung, welche Räume der Benutzer mit dem mindestens einen Reinigungsgerät aufgesucht hat, der Bericht eine Höheninformation umfasst. Über die Reinigung der Böden der Räume hinaus oder anstelle hiervon kann dadurch auch eine weitergehende Reinigung von andersartigen Oberflächen im Raum überwacht werden. Dies sind beispielsweise Oberflächen von Mobiliar (zum Beispiel Tische, Ablagen...), Einrichtungsgegenständen, Türen, Fenstern oder Wänden.

Der Bericht umfasst bevorzugt Informationen über Hinweise, Reinigungselemente zu tauschen, vorzugsweise in Verbindung mit einer Zeit- und/oder Ortsangabe des mindestens einen Reinigungsgerätes.

Der Bericht umfasst vorteilhafterweise eine Nutzungsdauer eines jeweiligen Reinigungselementes.

Bevorzugt umfasst der Bericht einen Zeitpunkt des Tausches eines jeweiligen Reinigungselementes.

Bevorzugt umfasst der Bericht eine Angabe über die in einem jeweiligen Raum mit dem mindestens einen Reinigungsgerät überstrichene Fläche, diese kann zum Beispiel als gereinigt angesehen werden. Es kann ein Vergleich mit einer zu reinigenden Fläche vorgenommen werden.

Günstigerweise umfasst der Bericht eine Aufenthaltsdauer des mindestens einen Reinigungsgerätes in einem jeweiligen Raum. Bei auffallend geringer Aufenthaltsdauer oder Nutzungsdauer lässt sich beispielsweise ableiten, dass der Benutzer die Räume verhältnismäßig schnell durchquert hat und die Gefahr einer unzureichenden Reinigung besteht.

Der Bericht kann vorteilhafterweise von der Datenverarbeitungseinheit an mindestens ein externes Zusatzgerät übertragbar sein. Ein Verwalter des Reinigungssystems, Aufsichtspersonen, Auftraggeber eines Reinigungsunternehmens und andere Interessierte können über die Reinigungstätigkeit auf diese Weise informiert werden. Der Bericht wird bevorzugt drahtlos an das externe Zusatzgerät übertragen. Dieses ist beispielsweise tragbar und in Gestalt eines Smartphones oder Tablet-Computers/Laptop-Computers oder einer Smartwatch. Auch eine Übertragung des Berichtes über ein Internetportal, eine Website oder dergleichen ist denkbar.

Günstig ist es, wenn das Ergebnis der Ermittlung auf Übereinstimmung mit einem vorgegebenen oder vorgebbaren Reinigungsplan überprüfbar ist, wobei im Falle fehlender Übereinstimmung ein Hinweis an eine Bedienperson ausgebbar ist, zum Beispiel einen Verwalter des Reinigungssystems, eine Aufsichtsperson oder einen Auftraggeber für ein Reinigungsunternehmen.

Es kann vorgesehen sein, dass das Reinigungssystem eine Mehrzahl von vom Reinigungssystem unterscheidbaren Reinigungsgeräten umfasst. Insbesondere kann einem jeweiligen Benutzer ein individuell identifizierbares Reinigungsgerät zugeordnet sein. Über die Identifikation des Reinigungsgerätes kann auf den Benutzer geschlossen werden.

Die eingangs gestellte Aufgabe wird durch ein erfindungsgemäßes Verfahren zur Reinigung von Flächen und insbesondere Böden von Räumen mit einem Reinigungssystem gelöst, welches Reinigungssystem mindestens ein von einem Benutzer handgeführtes Reinigungsgerät und mehrere Reinigungselemente umfasst, wobei an dem mindestens einen Reinigungsgerät ein Reinigungselement austauschbar halterbar ist, bei welchem Verfahren festgestellt wird, dass der Benutzer mit dem mindestens einen Reinigungsgerät von einem Raum in einen anderen Raum mit dem mindestens einen Reinigungsgerät wechselt oder gewechselt ist, und bei dem bei dem ein Hinweis bereitgestellt wird, das Reinigungselement auszutauschen.

Die Vorteile, die bereits im Zusammenhang mit der Erläuterung des erfindungsgemäßen Reinigungssystems erwähnt wurden, können durch Einsatz des Verfahrens ebenfalls erzielt werden. Diesbezüglich kann auf die voranstehenden Ausführungen verwiesen werden.

Vorteilhafte Ausführungsbeispiele des erfindungsgemäßen Verfahrens ergeben sich durch vorteilhafte Ausführungsformen des erfindungsgemäßen Reinigungssystems. Zur Vermeidung von Wiederholungen wird auf obige Ausführungen verwiesen.

Die nachfolgende Beschreibung bevorzugter Ausführungsformen der Erfindung dient im Zusammenhang mit der Zeichnung der näheren Erläuterung der Erfindung. Die beschriebenen vorteilhaften Ausführungsformen des erfindungsgemäßen Reinigungssystems erlauben die Durchführung vorteilhafter Ausführungsbeispiele des erfindungsgemäßen Verfahrens. Es zeigen:
- Figur 1:: eine perspektivische Darstellung eines Reinigungsgerätes und Reinigungselemente als Bestandteil eines erfindungsgemäßen Reinigungssystems;
- Figur 2:: ein schematisches Blockdiagramm einer ersten bevorzugten Ausführungsform des Reinigungssystems;
- Figur 3:: schematisch einen Benutzer beim Reinigen von Räumen unter Einsatz des Reinigungssystems aus Figur 2;
- Figur 4:: eine Darstellung entsprechend Figur 3 mit andersartigen Räumen;
- Figur 5:: ein Ausführungsbeispiel eines erfindungsgemäßen Verfahrens, durchgeführt mit dem Reinigungssystem aus Figur 2;
- Figur 6:: ein schematisches Blockdiagramm einer weiteren bevorzugten Ausführungsform des erfindungsgemäßen Reinigungssystems;
- Figur 7:: einen Benutzer beim Reinigen von Räumen unter Einsatz des Reinigungssystems aus Figur 6;
- Figur 8:: ein weiteres Blockdiagramm einer vorteilhaften Ausführungsform des erfindungsgemäßen Reinigungssystems;
- Figur 9:: einen Benutzer beim Reinigen von Räumen unter Einsatz des Reinigungssystems aus Figur 8; und
- Figur 10:: eine perspektivische Darstellung eines Reinigungsgerätes und von Reinigungselementen eines erfindungsgemäßen Reinigungssystems.

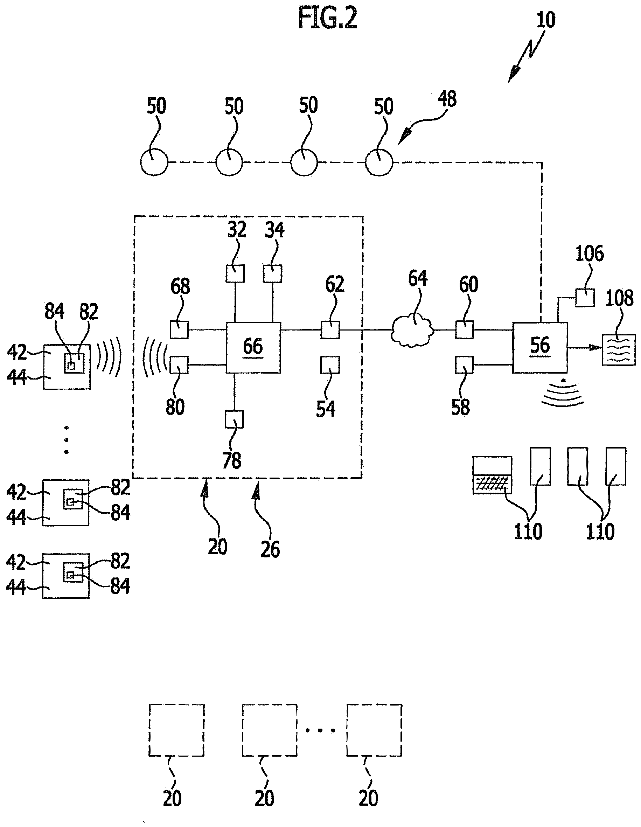

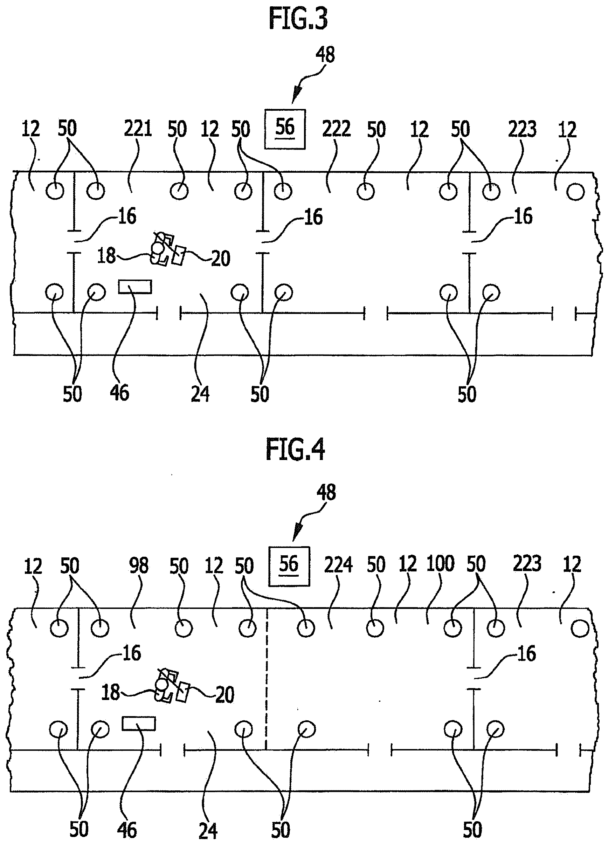

Die vorliegende Erfindung bezieht sich auf ein erfindungsgemäßes Reinigungssystem, von dem Figur 2 schematisch eine mit dem Bezugszeichen 10 belegte erste vorteilhafte Ausführungsform zeigt. Das Reinigungssystem 10 kommt zur Reinigung von Räumen 12 zum Einsatz, von denen in den Figuren 3, 7 und 8 drei Räume 221, 222, 223 beispielhaft referenziert sind. Im vorliegenden Beispiel weisen die Räume 12 physische Begrenzungen auf. Ohne Beschränkung der Allgemeingültigkeit können die Räume 221, 222, 223 aneinander grenzen, wobei zwischen benachbarten Räumen Übergänge 16 vorhanden sind. Die Übergänge 16 können offen sein, oder Türen können darin angeordnet sein.

Das Reinigungssystem 10 kommt zum Beispiel bei der Reinigung von Räumen 12 in Einrichtungen zum Einsatz, in denen ärztliche und pflegerische Hilfeleistungen angeboten werden, beispielsweise Krankenhäusern oder Sanatorien. Die Reinigung kann einem Reinigungsunternehmen übertragen worden sein, oder eine Reinigungsabteilung einer derartigen Einrichtung kann mit der Reinigung der Räume 12 betraut sein. Im Zusammenhang mit der Reinigung von Räumen derartiger Einrichtungen im Gesundheitswesen können Auflagen hinsichtlich der Durchführung der Reinigung bestehen, um einen Mindestsauberkeitsgrad zu sichern und insbesondere eine Verschleppung von Keimen zwischen den Räumen 12 zu verhindern.

Das Reinigungssystem 10 umfasst eine Mehrzahl von handgeführten Reinigungsgeräten 20, die vom Benutzer 18 zur manuellen Reinigung von Flächen und insbesondere Böden 24 der Räume 12 eingesetzt werden (in Figur 2 sind schematisch vier Reinigungsgeräte 20 gezeigt).

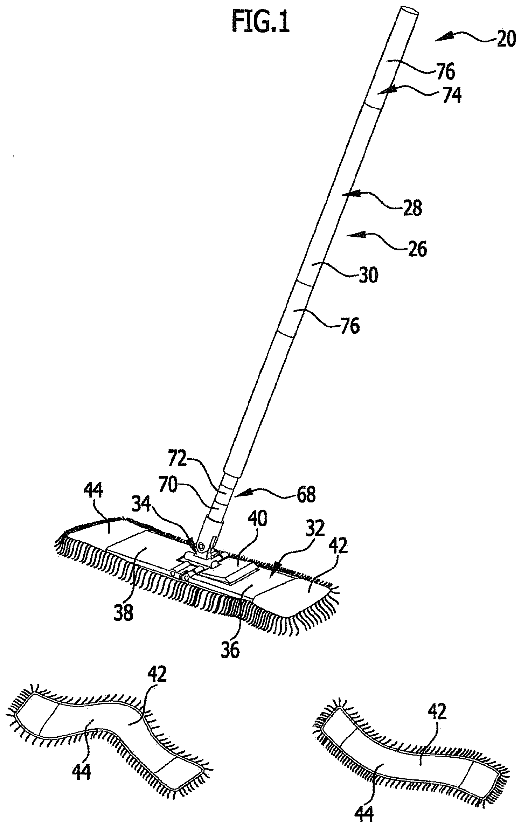

Die Figur 1 zeigt beispielhaft das Reinigungsgerät 20, ausgestaltet als sogenannter "Flachwischer" oder "Breitwischer" 26. Der Flachwischer 26 umfasst ein Griffelement 28 in Gestalt eines Stiels 30 und eine Halteeinheit 32, die über eine Gelenkeinheit 34 mit dem Stiel 30 verbunden ist. Die Gelenkeinheit 34 erlaubt vorliegend das Verschwenken des Stiels 30 relativ zur Halteeinheit 32 um mindestens eine und insbesondere zwei quer zueinander ausgerichtete Achsen.

Die Halteeinheit 32 umfasst zwei Abschnitte 36, 38, die jeweils im Wesentlichen planar ausgestaltet sind und in einer Haltestellung in einer gemeinsamen Ebene angeordnet sind. Durch einen Lösemechanismus 40 der Halteeinheit 32 können die Abschnitte 36, 38 verschwenkt und in eine in der Zeichnung nicht gezeigte Lösestellung überführt werden.

Das Reinigungssystem 10 umfasst eine Mehrzahl von Reinigungselementen 42, bei denen es sich vorliegend um Wischbezüge 44 für den Flachwischer 26 handelt. Die Wischbezüge 44 sind tuchartig und können an den die Lösestellung einnehmenden Abschnitten 36, 38 angebracht und nach deren Verschwenken in die Haltestellung an der Halteeinheit 32 gehaltert werden. Durch Betätigen des Lösemechanismus 40 kann ein Wischbezug 44 vom Flachwischer 26 abgenommen und gegen einen weiteren Wischbezug 44 ausgetauscht werden.

Das Reinigungssystem 10 kann eine Aufnahme für benutzte und unbenutzte Wischbezüge 44 aufweisen, beispielsweise in Gestalt eines vom Benutzer 18 mitführbaren Rollwagens 46.

Das Reinigungssystem 10 ermöglicht die Feststellung, ob der Benutzer 18 beim Reinigen der Räume 12 von einem Raum in einen weiteren Raum wechselt oder gewechselt ist, und darauf basierend die Ausgabe eines Hinweises an den Benutzer 18 am Flachwischer 26, dass in diesem Fall der benutzte Wischbezug 44 gegen einen unbenutzten Wischbezug 44 auszutauschen ist.

Zu diesem Zweck umfasst das Reinigungssystem 10 eine Lokalisierungseinrichtung 48, um die Position des Flachwischers 26 (mit dem Benutzer 18) in den Räumen 12 zu ermitteln. Vorliegend wird davon ausgegangen, dass die Reinigungsgeräte 20 allein durch Führung eines Benutzers 18 von einem Raum in einen weiteren Raum gelangen, so dass die Bezugnahme auf die Position des Benutzers 18 gleichzeitig eine Bezugnahme auf die Position des Reinigungsgerätes 20 ist und umgekehrt.

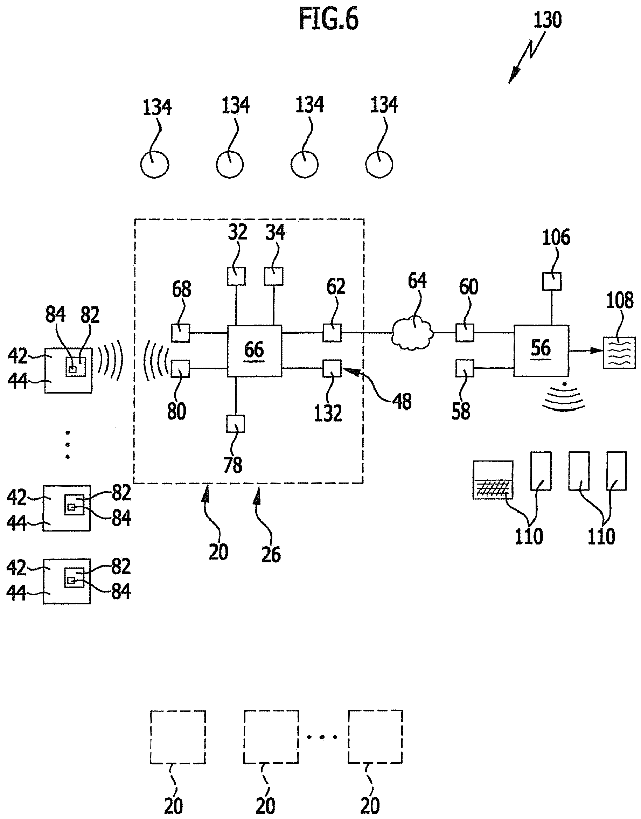

Beim Reinigungssystem 10 kann eine Fremdortung des Flachwischers 26 mittels der Lokalisierungseinrichtung 48 erfolgen. Zu diesem Zweck umfasst die Lokalisierungseinrichtung 48 Lokalisierungselemente 50, die den Räumen 12 zugeordnet sind. Die Lokalisierungselemente 50 sind in der Zeichnung schematisch dargestellt. Die Anzahl, Positionierung oder Größe der insbesondere in den Figuren 3 und 4 gezeigten Lokalisierungselemente 50 ist nur als beispielhaft für die Erläuterung der Funktionsweise des Reinigungssystems 10 anzusehen und nicht einschränkend. Entsprechendes gilt für die nachfolgend noch genannten, vom Reinigungsgerät 20 erfassbaren Positionslandmarken in den Figuren 6 bis 9.

Die Lokalisierungselemente 50 sind beim Reinigungssystem 10 Funkelemente, die mit einem Sende- und/oder Empfangselement 54 eines jeweiligen Flachwischers 26 zusammenwirken. Die Funkelemente sind beispielsweise Bluetooth- oder UWB-basiert, entsprechendes gilt für das Sende- und/oder Empfangselement 54.

Daten der Lokalisierungselemente 50 werden an eine Datenverarbeitungseinheit 56 der Lokalisierungseinrichtung 48 übermittelt. Die Datenverarbeitungseinheit 56 ist extern zu den Reinigungsgeräten 20 angeordnet. Beispielsweise ist die Datenverarbeitungseinheit 56 im Besitz oder unter der Verwaltung eines Reinigungsunternehmens oder des Betreibers der Einrichtung zur Gesundheitspflege. Die Übertragung von Daten von den Lokalisierungselementen 50 an die Datenverarbeitungseinheit 56 kann kabellos oder kabelgebunden erfolgen.

Der Datenverarbeitungseinheit 56 ist eine extern zu den Reinigungsgeräten 20 angeordnete Speichereinheit 58 zugeordnet, oder diese ist in die Datenverarbeitungseinheit 56 integriert. Die Speichereinheit 58 kann Bestandteil der Lokalisierungseinrichtung 48 sein.

In der Speichereinheit 58 sind Informationen über die Räume 12 gespeichert. Beispielsweise ist eine Karte der Räume 12 in der Speichereinheit 58 hinterlegt.

Alternativ oder ergänzend kann vorgesehen sein, dass die Datenverarbeitungseinheit 56 anhand unterscheidbarer Lokalisierungselemente 50, die jeweils Daten über die Kooperation mit dem Sende- und/oder Empfangselement 54 übermitteln, feststellen kann, in welchem Raum 12 sich der Flachwischer 26 befindet. Die Hinterlegung von Informationen über die Räume 12 in der Speichereinheit 58 umfasst somit auch insbesondere den Fall, dass in der Speichereinheit 58 Informationen über einen jeweiligen Raum 12 zugeordnete Lokalisierungselemente 50 hinterlegt ist.

Vorteilhafterweise ist jedoch mittels der Lokalisierungseinrichtung 48 die Position des Flachwischers 26 in einem jeweiligen Raum 12 bestimmbar. Günstig ist es, wenn der Flachwischer 26 mit einer Genauigkeit von weniger als 25cm geortet werden kann.

Die Lokalisierungseinrichtung 48 erlaubt es, über die Ortung des Flachwischers 26 festzustellen, ob der Benutzer 18 mit diesem von einem Raum 12 in einen weiteren Raum 12 wechselt oder gewechselt ist. Beispielsweise wechselt der Benutzer 18 vom Raum 221 in den Raum 222. Anhand der von den Lokalisierungselementen 50 übertragenen Daten kann dieser Raumwechsel von der Datenverarbeitungseinheit 56 unter Ausnutzung der in der Speichereinheit 58 hinterlegten Informationen festgestellt werden.

Die Datenverarbeitungseinheit 56 kann bei erkanntem Raumwechsel eine diesbezügliche Information an den Flachwischer 26 übertragen. Zu diesem Zweck umfasst das Reinigungssystem 10 ein Kommunikationselement 60 in Verbindung mit der Datenverarbeitungseinheit 56 und ein weiteres Kommunikationselement 62 im Flachwischer 26. Die Datenübertragung erfolgt vorzugsweise kabellos über ein in der Zeichnung schematisch dargestelltes Kommunikationsnetz 64.

Das Kommunikationselement 62 ist mit einer Steuereinheit 66 des Flachwischers 26 gekoppelt oder von dieser umfasst.

Das Reinigungssystem 10 umfasst eine Hinweiseinheit 68 zum Ausgeben eines Hinweises an den Benutzer 18, dass aufgrund des erfolgten Raumwechsels der Wischbezug 44 gegen einen unbenutzten Wischbezug auszutauschen ist. Vorliegend ist die Hinweiseinheit 68 vom Flachwischer 26 umfasst und braucht daher nicht vom Benutzer 18 mitgeführt zu werden. Die Hinweiseinheit 68 kann bei Erhalt des Raumwechselsignals von der Steuereinheit 66 angesteuert werden.

Die Hinweiseinheit 68 umfasst vorliegend eine Anzeigeeinheit 70, um dem Benutzer 18 ein optisches Signal bereitzustellen. Beispielsweise ist dies ein Blinksignal oder ein Leuchtsignal. Auch eine Bildanzeige kann vorgesehen sein.

Weiter umfasst die Hinweiseinheit 68 eine Geräuscheinheit 72 umfassend einen Lautsprecher, um dem Benutzer 18 einen akustischen Hinweis bereitzustellen (zum Beispiel einen Pfeifton, Piepton oder Hupton).

Weiter umfasst die Hinweiseinheit 68 eine Vibrationseinheit 74, um dem Benutzer 18 einen haptischen Hinweis bereitzustellen. Die Vibrationseinheit 74 ist zum Beispiel in das Griffelement 28 integriert und kann zwei Vibrierbereiche 76 umfassen, durch deren Vibration der Benutzer 18 auf den Raumwechsel hingewiesen wird.

Auch die Anzeigeeinheit 70 oder die Geräuscheinheit 72 kann in den Stiel 30 integriert sein, wobei auch eine Anordnung an der Halteeinheit 32 möglich ist.

Bei einer vorteilhaften Umsetzung des Reinigungssystems 10 kann vorgesehen sein, dass die Gelenkeinheit 34 die Hinweiseinheit 68 ausbildet. Die Gelenkeinheit 34 kann dabei von der Steuereinheit 66 ansteuerbar sein. Bei einem Raumwechsel kann die Gelenkeinheit 34 unter dieser Ansteuerung blockiert werden, so dass ein Verschwenken des Stiels 30 zur Halteeinheit 32 unmöglich oder erschwert ist. Durch die sich daraus ergebende Einschränkung der Funktionalität des Flachwischers 26 kann der Benutzer 18 auf den Raumwechsel hingewiesen und zum Tausch des Wischbezuges 44 aufgefordert werden.

Alternativ oder ergänzend kann vorgesehen sein, dass die Halteeinheit 32 insbesondere über deren Lösemechanismus 40 die Hinweiseinheit 68 ausbildet. In diesem Fall kann der Lösemechanismus 40 von der Steuereinheit 66 bei einem Raumwechsel angesteuert werden, so dass die Abschnitte 36, 38 von der Haltestellung in die Lösestellung überführt werden. Der Wischbezug 44 fällt vom Flachwischer 26 ab, was vom Benutzer 18 als Hinweis über den erfolgten Raumwechsel und als Aufforderung zum Tausch des Wischbezuges 44 aufgefasst werden kann.

Der Hinweis kann mit Zeitverzögerung ausgebbar sein, oder ein Raumwechsel wird erst angenommen, wenn der Benutzer 18 für eine vorgebbare Zeitdauer (z.B. einige Sekunden) in den anderen Raum übergewechselt ist.

Bei einer Abwandlung des Reinigungssystems 10 kann vorgesehen sein, dass von der Datenverarbeitungseinheit 56 an den Flachwischer 26 keine Information über den Raumwechsel übertragen wird. Stattdessen kann eine Positionsinformation übertragen werden. Der Flachwischer 26 kann eine Speichereinheit 78 umfassen, in dem Informationen betreffend die Räume 12 und die diesen zugeordneten Lokalisierungselemente 50 hinterlegt sind, entsprechend dem Inhalt der Speichereinheit 58. Anhand der Positionsinformation kann von der Steuereinheit 66 der Raumwechsel festgestellt werden und ein diesbezüglicher Hinweis mit Aufforderung zum Tausch des Wischbezuges 44 für den Benutzer 18 bereitgestellt werden.

Das erfindungsgemäße Reinigungssystem 10 weist über die Möglichkeit, den Flachwischer 26 zu orten und einen Hinweis für den Benutzer 18 zum Wechsel des Wischbezugs 44 bereitzustellen, den zusätzlichen Vorteil der Kontrolle auf, ob benutzte oder unbenutzte Wischbezüge 44 zur Reinigung eingesetzt werden.

Zu diesem Zweck umfasst das Reinigungssystem 10 eine Sensoreinheit 80. Vorliegend umfasst der Flachwischer 26 vorteilhafterweise die Sensoreinheit 80, die mit der Steuereinheit 66 gekoppelt ist. Die Sensoreinheit 80 ist eine Funk-Sensoreinheit, die insbesondere ein RFID-Lesegerät umfasst oder als solches ausgestaltet ist. Mit der Sensoreinheit 80 können RFID-Tags 82 erkannt und von diesen jeweils umfasste Speicherglieder 84 ausgelesen und modifiziert werden, die jeweils von den Wischbezügen 44 umfasst sind.

In jedem Wischbezug 44 ist dementsprechend ein RFID-Tag 82 integriert. Im jeweiligen Speicherglied 84 ist eine Identifikationsnummer des Wischbezuges 44 gespeichert, durch die der Wischbezug 44 eindeutig gekennzeichnet und identifizierbar ist. Im Speicherglied 84 ist ferner eine Information über den Benutzungszustand des Wischbezuges 44 gespeichert, d. h. entweder ist der Wischbezug 44 als benutzt oder als unbenutzt gekennzeichnet.

"Benutzt" bedeutet vorliegend insbesondere "verschmutzt, zu reinigen" und "unbenutzt" bedeutet vorliegend insbesondere "nicht verschmutzt, gereinigt" oder "neu".

Beim Anbringen des Wischbezuges 44 an der Halteeinheit 32 kann die Sensoreinheit 80 das RFID-Tag 82 erkennen und das Speicherglied 84 auslesen. Möglich ist dabei eine NFC-basierte Kopplung, um die räumliche Nähe des Wischbezuges 44 zur Halteeinheit 32 sicherzustellen. Durch die geringe Reichweite der NFC-Kopplung im Bereich von wenigen Zentimetern lässt sich dadurch weitgehend ausschließen, dass von der Sensoreinheit 80 irrtümlich ein falscher Wischbezug 44 erkannt wird.

Informationen über die Wischbezüge 44 sind anhand von deren Identifikationsnummern in der Speichereinheit 58 gespeichert. Die Informationen umfassen insbesondere den Benutzungszustand eines jeweiligen Wischbezuges 44.

Die Informationen über die Wischbezüge 44 können ergänzend oder alternativ in der Speichereinheit 78 eines jeweiligen Flachwischers 26 gespeichert sein. Bei Vorhandensein sowohl der Speichereinheit 58 als auch der Speichereinheit 78 kann vorgesehen sein, dass der Inhalt der Speichereinheit 78 mit demjenigen der Speichereinheit 58 synchronisiert wird. Dies ermöglicht beispielsweise die Erfassung und Verarbeitung von Informationen im Flachwischer 26 während der Reinigung, wobei nach Beendigung der Reinigung diese Informationen an die Speichereinheit 58 zu deren Aktualisierung übertragen werden können. Eine Kommunikation von der Sensoreinheit 80 mit einer der Speichereinheiten 58 oder 78 erfolgt über die Steuereinheit 66 sowie gegebenenfalls die Datenverarbeitungseinheit 56.

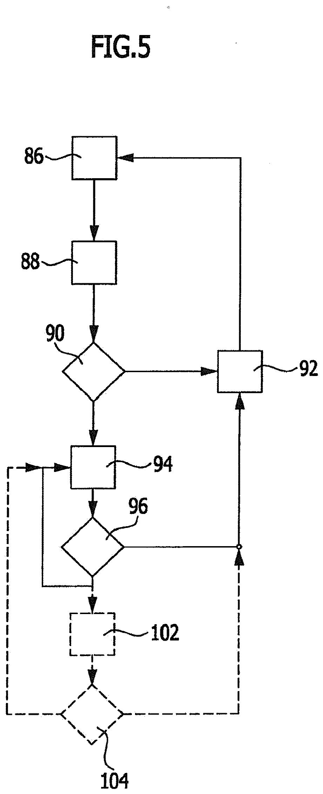

Nachfolgend wird unter Verweis insbesondere auf die Figuren 2, 3 und 5 der Ablauf eines vorteilhaften Ausführungsbeispiels des erfindungsgemäßen Verfahrens unter Einsatz des Reinigungssystemes 10 erläutert. Figur 5 zeigt ein diesbezügliches Diagramm.

Der Verfahrensschritt 86 kennzeichnet den Beginn der Reinigung der Räume 12, beispielsweise wird mit der Reinigung im Raum 221 mit der Reinigung begonnen. Im Verfahrensschritt 86 bringt der Benutzer 18 einen Wischbezug 44 am Flachwischer 26 an.

Im darauffolgenden Verfahrensschritt 88 wird mittels der Sensoreinheit 80 das RFID-Tag 82 erkannt und dessen Speicherglied 84 ausgelesen. Anhand der Identifikationsnummer kann von der Steuereinheit 66 festgestellt werden, um welchen Wischbezug 44 es sich handelt. Ist im Speicherglied 84 der Benutzungszustand hinterlegt, kann dieser unmittelbar mit der Sensoreinheit 80 erfasst werden. Alternativ kann der Benutzungszustand durch Abfrage der Speichereinheit 58 oder der Speichereinheit 78 von der Steuereinheit 66 ermittelt werden.

Im darauffolgenden Verfahrensschritt 90 wird der zuvor erfasste Benutzungszustand von der Steuereinheit 66 dahingehend überprüft, ob der Wischbezug 44 unbenutzt ist oder bereits benutzt wurde. Im Falle eines bereits benutzten Wischbezuges wird das Verfahren mit dem Verfahrensschritt 92 fortgesetzt.

Im Verfahrensschritt 92 ergeht über die Hinweiseinheit 68, die Gelenkeinheit 34 und/oder die Halteeinheit 32 ein Hinweis an den Benutzer 18, den Wischbezug 44 gegen einen anderen Wischbezug 44 auszutauschen. Die Art und Weise der Übermittlung des Hinweises an den Benutzer 18 kann mit derjenigen übereinstimmen, die bei einem Raumwechsel erfolgt, oder sich hiervon unterscheiden.

Im Verfahrensschritt 92 wird erforderlichenfalls der Benutzungszustand für den identifizierten Wischbezug 44 auf "benutzt" aktualisiert. Dies ist zum Beispiel dann der Fall, wenn unterschiedliche Informationen über den Benutzungszustand in dem Speicherglied 84, der Steuereinheit 58 oder der Steuereinheit 78 vorliegen.

Das Verfahren wird mit dem Tausch des Wischbezuges 44 mit dem Verfahrensschritt 86 fort- und neu in Gang gesetzt.

Sofern im Verfahrensschritt 90 ermittelt wird, dass der Wischbezug 44 unbenutzt ist, wird das Verfahren mit dem Verfahrensschritt 94 fortgesetzt. Im Verfahrensschritt 94 führt der Benutzer 18 mit dem Flachwischer 26 die Reinigung des Raumes 221 durch. Mittels der Lokalisierungseinrichtung 48 wird, beispielsweise in regelmäßigen Intervallen, die Position des Flachwischers 26 festgestellt.

Im Verfahrensschritt 96 kann festgestellt werden, ob der Benutzer 18 mit dem Flachwischer 26 von Raum 221 in den Raum 222 gewechselt ist. Bejahendenfalls wird das Verfahren mit dem Verfahrensschritt 92 fortgesetzt. Ein Hinweis an den Benutzer 18 über den Raumwechsel ergeht, und der Benutzungszustand des Wischbezuges 44 wird im Speicherglied 84 und/oder der Speichereinheit 58 oder 78 geändert.

Anschließend wird das Verfahren erneut beim Verfahrensschritt 86 in Gang gesetzt, wobei der Benutzer 18 im Raum 222 einen unbenutzten Wischbezug 44 anbringt und diesen bis zum Wechseln in den Raum 223 reinigt.

Sofern im Verfahrensschritt 96 kein Raumwechsel festgestellt wird, wird das Verfahren im Verfahrensschritt 94 fortgesetzt, bei dem weiterhin angenommen wird, dass der Benutzer 18 den Raum 221 reinigt.

Wie erwähnt besteht beim Reinigungssystem 10 mittels der Lokalisierungseinrichtung 48 die Möglichkeit, die Position des Flachwischers 26 in einem jeweiligen Raum 12 festzustellen. Dies gibt die Möglichkeit, auch etwaige Auflagen an die Reinigung dahingehend zu erfüllen, dass innerhalb von Räumen 12 der Wischbezug 44 zu wechseln ist. Darauf wird nachfolgend unter Verweis auf die Figuren 4 und 5 eingegangen.

Figur 4 zeigt einen Raum 224, der beispielsweise dieselbe Größe aufweist wie die Räume 221 und 222 zusammen. Dies ist nicht-einschränkend und dient nur der Erläuterung der Erfindung. Der Raum 224 umfasst Raumbereiche 98 und 100, die voneinander unterscheidbar sind. Es kann vorgesehen sein, dass die Auflage besteht, den Wischbezug 44 dann zu wechseln, wenn der Benutzer 18 mit dem Flachwischer 26 vom Raumbereich 98 in den Raumbereich 100 wechselt.

Alternativ oder ergänzend kann vorgesehen sein, dass die Auflage existiert, den Wischbezug 44 nach Überstreichen einer vorgegebenen oder vorgebbaren Fläche im Raum 12 zu wechseln. Durch Lokalisierung des Benutzers 18 mit dem Flachwischer 26 kann die beim Reinigen überstrichene Fläche ermittelt werden.

Alternativ oder ergänzend kann die Auflage existieren, dass ein Wischbezug 44 nur für eine vorgegebene oder vorgebbare Nutzungsdauer zur Reinigung eingesetzt werden darf. Das Reinigungssystem 10 erlaubt auch die Bestimmung der Nutzungsdauer, beispielsweise beginnend mit dem Anbringen des Wischbezuges 44 an der Halteeinheit 32 im Verfahrensschritt 86. Nach Ablauf der Nutzungsdauer, die von der Steuereinheit 66 ermittelbar sein kann, kann in diesem Fall ebenfalls der Wechsel eines Wischbezuges 44 erforderlich sein.

Figur 5 zeigt mit gestrichelt dargestellten weiteren Verfahrensschritten im Anschluss an den Verfahrensschritt 96, dass bei Vorliegen zumindest einer der drei zuletzt genannten Voraussetzungen oder Bedingungen erforderlichenfalls ein Hinweis an den Benutzer 18 zum Wechsel des Wischbezuges 44 ergeht oder die Reinigung fortgesetzt wird. Wird im Verfahrensschritt 96 beispielsweise festgestellt, dass der Benutzer 18 nicht in einen anderen Raum gewechselt ist, kann im Verfahrensschritt 102 die Position des Benutzers 18 mit dem Flachwischer 26 bestimmt und/oder die Nutzungsdauer für den Wischbezug 44 berechnet werden.

Im darauffolgenden Verfahrensschritt 104 kann ermittelt werden, ob eine der folgenden Bedingungen zutrifft:
- Wechsel von einem Raumbereich in einen weiteren Raumbereich, beispielsweise vom Raumbereich 98 in den Raumbereich 100;
- Überstreichen der vorgebbaren oder vorgegebenen Fläche bei der Reinigung des Raumes;
- Ablauf der Nutzungsdauer für einen Wischbezug 44.

Trifft eine der Bedingungen zu, kann das Verfahren mit dem Verfahrensschritt 92 fortgesetzt werden. Anderenfalls kann das Verfahren mit dem Verfahrensschritt 94 und der Reinigung ohne Bezugwechsel fortgesetzt werden.

Das Reinigungssystem 10 umfasst ferner eine Reinigungseinrichtung 106 zum Reinigen der Reinigungselemente 42. Die Reinigungseinrichtung 106 steht zum Beispiel mit der Datenverarbeitungseinheit 56 in Kommunikation. Benutzte Reinigungselemente können von der Reinigungseinrichtung 106 gereinigt werden. Dabei besteht insbesondere die Möglichkeit, dass ein im Speicherglied 84 hinterlegter Benutzungszustand eines jeweiligen Wischbezuges 44 auf "unbenutzt" geändert wird. In entsprechender Weise kann der mit dem jeweiligen Wischbezug 44 verknüpfte Benutzungszustand in der Speichereinheit 58 oder 78 geändert werden.

Das Reinigungssystem 10 sieht ferner vor, dass vorteilhafterweise ein Bericht 108 über die Ausführung der Reinigung der Räume 12 erstellt wird oder werden kann. Der Bericht 108 kann zum Beispiel über ein Internetportal oder eine Website etc. zur Einsicht bereitgestellt werden.

Insbesondere ist die Möglichkeit gegeben, den Bericht 108 vorzugsweise drahtlos an insbesondere tragbare Zusatzgeräte 110 zu übertragen. Die Zusatzgeräte 110 sind oder umfassen zum Beispiel Smartphones, Smartwatches, Tablet-Computer, Laptop-Computer oder Desktop-Computer. Aufsichtspersonen, Auftraggeber eines Reinigungsunternehmens oder andere Interessierte können mit dem Bericht 108 über den Reinigungsvorgang informiert werden.

Zur Erstellung des Berichts 108 kann die Datenverarbeitungseinheit 56 beispielsweise ermitteln, welche Räume 12 der Benutzer 18 mit dem Flachwischer 26 aufgesucht hat. Es wird ermittelt, ob der Benutzer 18 jeweils den Wischbezug 44 bei einem Raumwechsel oder Raumbereichswechsel getauscht hat, wie dies der Auflage entspricht. Auch ein etwaiger Tausch bei überschrittener Nutzungsdauer für den Wischbezug 44, bei Überschreiten einer vorgegebenen oder vorgebbaren Fläche innerhalb eines Raumes 12 oder bei einem Wechsel von einem Raumbereich 98 zu einem anderen Raumbereich 100 kann festgestellt werden. Die in einem jeweiligen Raum 12 überstrichene Fläche kann ermittelt werden und mit einer zu reinigenden Fläche, beispielsweise der Größe des Raumes 12, verglichen werden. Die Aufenthaltsdauer des Benutzers 18 in einem jeweiligen Raum 12 oder Raumbereich kann von der Datenverarbeitungseinheit 56 festgestellt werden.

Ein Teil oder all diese Feststellungen können Bestandteil des Berichtes 108 werden. Im Bericht 108 kann insbesondere darauf hingewiesen werden, dass ein erforderlicher Tausch eines Wischbezuges 44 durch den Benutzer 18 auf einen entsprechenden Hinweis unterlassen wurde.

Das Ergebnis der Ermittlung der Datenverarbeitungseinheit 56 wird vorzugsweise von der Datenverarbeitungseinheit 56 oder von einem der Zusatzgeräte 110 auf Übereinstimmung mit einem vorgegebenen oder vorgebbaren Reinigungsplan überprüft, in dem die Auflagen für die Reinigung hinterlegt sind. Im Falle fehlender Übereinstimmung kann ein Hinweis an eine Bedienperson ausgegeben werden, zum Beispiel eine Aufsichtsperson oder einen Auftraggeber des Reinigungsunternehmens.

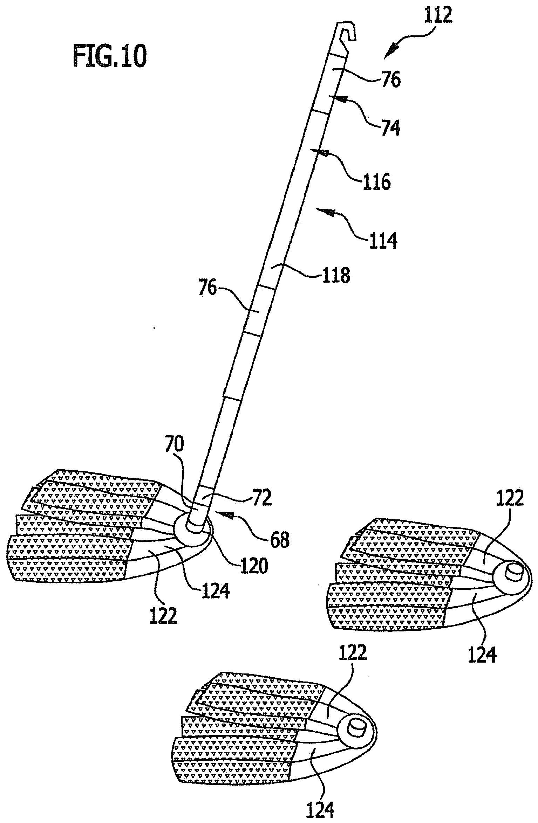

Die Figur 10 zeigt in einer der Figur 1 entsprechenden Weise ein Reinigungsgerät 112. Das Reinigungsgerät 112 ist vorliegend ausgestaltet als Wischmopp 114. Der Wischmopp 114 weist ein Griffelement 116 in Gestalt eines Stiels 118 auf sowie eine Halteeinheit 120 zum Haltern eines Reinigungselementes 122. Das Reinigungselement 122 ist ein Wischkopf 124 mit einer Mehrzahl von fransenartigen Reinigungsliedern. Die Figur 10 zeigt beispielhaft drei am Wischmopp 114 austauschbar befestigbare Wischköpfe 124.

Ergänzend oder alternativ zu den Reinigungsgeräten 20 können die Reinigungsgeräte 112 beim Reinigungssystem 10 oder einem der nachfolgend erläuterten Reinigungssysteme zum Einsatz kommen. Auch die Reinigungsgeräte 112 verfügen über die im Zusammenhang mit dem Reinigungsgerät 20 beschriebene Funktionalität. Diesbezüglich wird auf die voranstehenden Ausführungen verwiesen.

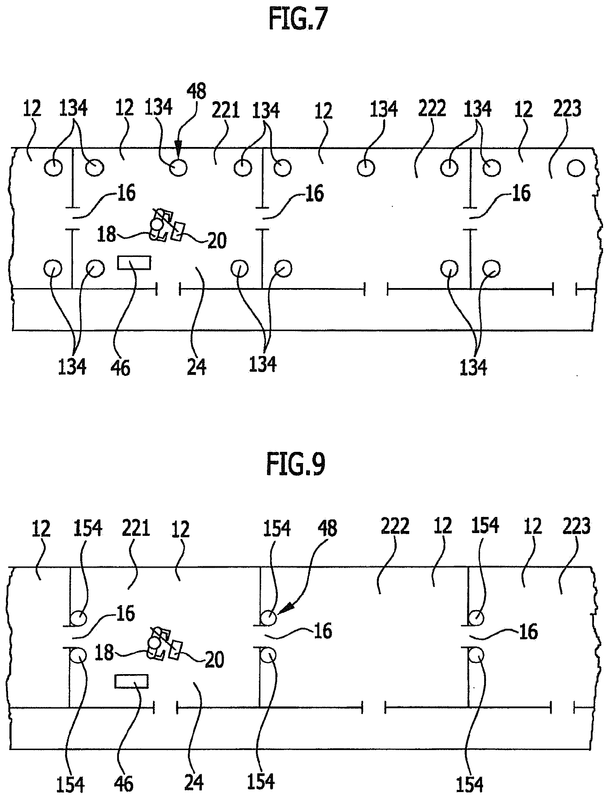

Nachfolgend wird unter Verweis auf die Figuren 6 und 7 auf eine weitere, mit dem Bezugszeichen 130 belegte vorteilhafte Ausführungsform eines erfindungsgemäßen Reinigungssystems eingegangen. Für gleiche oder gleichwirkende Merkmale und Bauteile der Reinigungssysteme 10 und 130 werden identische Bezugszeichen benutzt. Die mit dem Reinigungssystem 10 erzielbaren Vorteile werden beim Reinigungssystem 130 ebenfalls erzielt, so dass diesbezüglich auf die voranstehenden Ausführungen verwiesen werden kann.

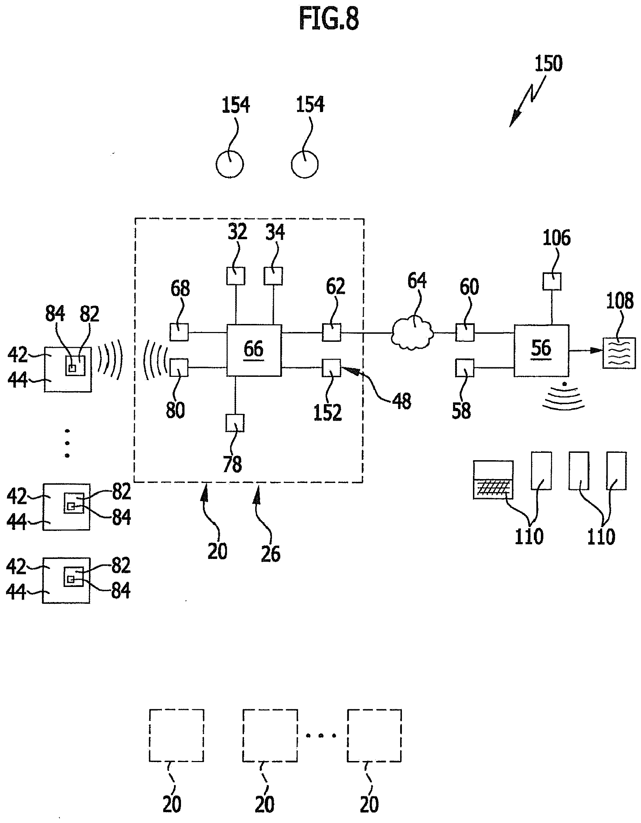

Entsprechendes gilt für eine mit dem Bezugszeichen 150 belegte vorteilhafte Ausführungsform eines erfindungsgemäßen Reinigungssystems, auf das im Anschluss unter Verweis auf die Figuren 8 und 9 eingegangen wird.

Bei den Reinigungssystemen 130 und 150 wird nur auf die wesentlichen Unterschiede im Vergleich zum Reinigungssystem 10 eingegangen.

Beim Reinigungssystem 130 ist die Lokalisierungseinrichtung 48 unterschiedlich zu derjenigen des Reinigungssystems 10 ausgestaltet. Es erfolgt statt einer Fremdortung des Benutzers 18 mit dem Flachwischer 26 eine Selbstortung ausgehend vom Flachwischer 26. Zu diesem Zweck umfasst die Lokalisierungseinrichtung 48 eine Sensoreinheit 132 und die mit dieser gekoppelte Steuereinheit 66. Positionslandmarken 134 können von der Sensoreinheit 132 erfasst werden. Die Positionslandmarken 134 sind einem jeweiligen Raum 12 zugeordnet, so dass die Lokalisierungseinrichtung 48 die Anwesenheit des Benutzers 18 mit dem Flachwischer 26 im Raum 12 feststellen kann.

Bei einer vorteilhaften Umsetzung definieren die Positionslandmarken 134 ein relatives Koordinatensystem, anhand dessen die Position des Benutzers 18 in einem bestimmten Raum 12 ebenso ermittelt werden kann, wie dies vorliegend am Beispiel des Reinigungssystems 10 erläutert wurde.

Die Positionslandmarken 134 sind beispielsweise Funk-Landmarken oder umfassen derartige, zum Beispiel Bluetooth-Landmarken oder UWB-Landmarken. Auch der Einsatz von RFID-Landmarken ist denkbar.

Informationen über die Räume 12 können wie beim Reinigungssystem 10 in der Speichereinheit 78 und/oder 58 hinterlegt sein.

Die Sensoreinheit 132 kann bei einer andersartigen Ausführungsform optisch ausgestaltet sein, um die Positionslandmarken 134 optisch zu erfassen. Dies eröffnet zum Beispiel die Möglichkeit, als Positionslandmarken charakteristische Merkmale der Räume 12 zur Selbstortung heranzuziehen, ohne dass gesonderte Positionslandmarken 134 in den Räumen 12 installiert werden müssen, wie dies zum Beispiel bei den vorstehend erwähnten Funk-Landmarken der Fall ist.

Im Übrigen kann auf obige Ausführungen verwiesen werden.

Bei einem Reinigungssystem 150 umfasst die Lokalisierungseinrichtung 48 eine vom Reinigungsgerät 20 umfasste Sensoreinheit 152. Die Sensoreinheit 152 ist beispielsweise eine Funk-Sensoreinheit und beispielsweise als RFID-Lesegerät ausgestaltet. Es sind Positionslandmarken 154 vorgesehen, beispielsweise in Form von RFID-Tags.

Bei einer andersartigen Umsetzung könnte die Sensoreinheit 152 optisch ausgestaltet sein und die Positionslandmarken 154 als optisch erkennbare Landmarken, zum Beispiel umfassend einen Barcode oder einen Matrix-Code.

Jedem Raum 12 ist mindestens eine Positionslandmarke 154 zugeordnet, wobei diese vorteilhafterweise im Bereich von Übergängen 16 zwischen aneinandergrenzenden Räumen angeordnet sind. Vorliegend sind je zwei Positionslandmarken zwischen den Räumen 221 und 222 sowie zwischen 222 und 223 etc. angeordnet.

Die Sensoreinheit 152 ist eine Nahbereichserfassungseinheit, die die Positionslandmarken 154 nur dann erfasst, wenn der Abstand des Flachwischers 26 zu den Positionslandmarken 154 einen Schwellenabstand unterschreitet. Durch Anordnung der Positionslandmarken 154 im Bereich der Übergänge 16 zwischen den Räumen 12 besteht dadurch die Möglichkeit festzustellen, wenn der Benutzer von einem Raum 12 in einen weiteren Raum 12 wechselt oder gewechselt ist. Basierend hierauf wird dem Benutzer an der Hinweiseinheit 68, der Gelenkeinheit 34 oder der Halteeinheit 32 ein Hinweis bereitgestellt, den Wischbezug 44 zu tauschen.

Beim Reinigungssystem 150 kann vorgesehen sein, dass allein der Übergang von einem Raum 12 in einen weiteren Raum von der Lokalisierungseinrichtung 48 erfasst wird, ohne dass eine Information über die Identität eines jeweiligen Raumes 12 vorliegt. Es ist umgekehrt jedoch auch möglich, dass die Positionslandmarken 154 eine Identifikationsnummer, Codierung oder dergleichen umfassen, die von der Lokalisierungseinrichtung 48 erkannt und zur Identifikation des jeweiligen Raumes 12 ausgewertet werden kann. Zu diesem Zweck kann zur Speicherung dieser Informationen im Flachwischer 26 die Speichereinheit 78 oder die Speichereinheit 58 in Verbindung mit der Datenverarbeitungseinheit 56 vorgesehen sein.

Bei den Reinigungssystemen 130 und 150 besteht die Möglichkeit der Abwandlung dadurch, dass extern zum jeweiligen Reinigungsgerät 20 die Datenverarbeitungseinheit 56, die Speichereinheit 58 und die Reinigungseinrichtung 106 entfällt und eine Kommunikation eines jeweiligen Reinigungsgerätes 20 nach außen abgesehen von den Positionslandmarken 134, 154 und den Reinigungselementen 42 unterbleibt.

Weiterhin ist denkbar, dass ein Reinigungssystem die Möglichkeiten der Ortung des Reinigungsgerätes 20 umfasst, wie sie im Zusammenhang mit dem Reinigungssystem 10, dem Reinigungssystem 130 und/oder dem Reinigungssystem 150 beschrieben wurden. Es ist dementsprechend sowohl Fremdortung als auch Selbstortung möglich.

Es versteht sich, dass ein jeweiliges Reinigungsgerät zur Energieversorgung eine in der Zeichnung nicht dargestellte Energiequelle umfassen kann, insbesondere mindestens eine wiederaufladbare Batterie.

Die nachfolgende Beschreibung umfasst insbesondere die Offenbarung der anhand nachfolgender Sätze definierten Ausführungsformen eines erfindungsgemäßen Reinigungssystems bzw. eines erfindungsgemäßen Verfahrens zur Reinigung von Flächen und insbesondere Böden von Räumen mit einem Reinigungssystem:
1. Reinigungssystem zur Reinigung von Flächen und insbesondere Böden von Räumen, umfassend mindestens ein von einem Benutzer (18) handgeführtes Reinigungsgerät (20, 112) und mehrere Reinigungselemente (42, 122), wobei an dem mindestens einen Reinigungsgerät (20, 112) ein Reinigungselement (42, 122) austauschbar halterbar ist, eine Lokalisierungseinrichtung (48) zum Feststellen, wenn der Benutzer (18) mit dem mindestens einen Reinigungsgerät (20, 112) von einem Raum (12) in einen weiteren Raum (12) wechselt oder gewechselt ist, und eine mit dieser gekoppelte Hinweiseinheit (68) zum Bereitstellen eines Hinweises für den Benutzer (18), das Reinigungselement (42, 122) am mindestens einen Reinigungsgerät (20, 112) auszutauschen.
2. Reinigungssystem nach Satz 1, dadurch gekennzeichnet, dass das mindestens eine Reinigungsgerät (20) ein Flachwischer (26) ist und die Reinigungselemente (42) Wischbezüge (44) für den Flachwischer (26) sind oder dass das mindestens eine Reinigungsgerät (112) ein Wischmopp (114) ist und die Reinigungselemente (122) Wischköpfe (124) für den Wischmopp (114) sind.
3. Reinigungssystem nach Satz 1 oder 2, dadurch gekennzeichnet, dass das mindestens eine Reinigungsgerät (20, 112) die Hinweiseinheit (68) umfasst.
4. Reinigungssystem nach einem der voranstehenden Sätze, dadurch gekennzeichnet, dass die Hinweiseinheit (68) zumindest eines der Folgenden umfasst oder nach einem der Folgenden ausgestaltet ist:
   - eine Anzeigeeinheit (70) zum Ausgeben eines optischen Hinweises;
   - eine Geräuscheinheit (72) zum Ausgeben eines akustischen Hinweises;
   - eine Vibrationseinheit (74) zum Ausgeben eines haptischen Hinweises, insbesondere durch Vibration eines Griffelementes (28) des mindestens einen Reinigungsgerätes (20, 112).
5. Reinigungssystem nach einem der voranstehenden Sätze, dadurch gekennzeichnet, dass das mindestens eine Reinigungsgerät (20, 112) eine Halteeinheit (30, 120) zum Haltern des Reinigungselementes (42, 122) am Reinigungsgerät (20, 112) umfasst und dass die Halteeinheit (32, 120) die Hinweiseinheit (68) ausbildet, wobei die Halteeinheit (32, 120) als Hinweis zum Freigeben des Reinigungselementes (42, 122) ansteuerbar ist.
6. Reinigungssystem nach einem der voranstehenden Sätze, dadurch gekennzeichnet, dass das mindestens eine Reinigungsgerät (20) ein Griffelement (28), eine Halteeinheit (32) zum Haltern des Reinigungselementes (42) und eine diese verbindende Gelenkeinheit (34) aufweist und dass die Gelenkeinheit (34) die Hinweiseinheit (68) ausbildet, wobei die Gelenkeinheit (34) als Hinweis zum Blockieren ansteuerbar ist.
7. Reinigungssystem nach einem der voranstehenden Sätze, dadurch gekennzeichnet, dass der Hinweis erst nach Ablauf einer vorgegebenen oder vorgebbaren Zeitverzögerung der Feststellung bereitstellbar ist oder dass der Hinweis erst bereitstellbar ist, wenn der Benutzer (18) für eine vorgegebene oder vorgebbare Zeitdauer in den weiteren Raum (12) gewechselt ist.
8. Reinigungssystem nach einem der voranstehenden Sätze, dadurch gekennzeichnet, dass mittels der Lokalisierungseinrichtung (48) die Anwesenheit des mindestens einen Reinigungsgerätes (20, 112) in einem jeweiligen Raum (12) ermittelbar ist.
9. Reinigungssystem nach einem der voranstehenden Sätze, dadurch gekennzeichnet, dass mittels der Lokalisierungseinrichtung (48) die Position des mindestens einen Reinigungsgerätes (20, 112) innerhalb zumindest eines bestimmbaren Raumes (12) und vorzugsweise innerhalb eines beliebigen der Räume (12) ermittelbar ist, wobei in einer Speichereinheit (58, 78) des Reinigungssystems (10; 130) Informationen über die Räume (12) hinterlegt sind, insbesondere mittels einer Karte, in welcher die Position des mindestens einen Reinigungsgerätes (20, 112) ermittelbar ist.
10. Reinigungssystem nach Satz 9, dadurch gekennzeichnet, dass die Position des mindestens einen Reinigungsgerätes (20, 112) in einem relativen Bezugssystem ermittelbar ist, das von in den Räumen angeordneten Lokalisierungselementen (50) zum Erfassen des mindestens einen Reinigungsgerätes (20, 112) und/oder Positionslandmarken (134; 154), die durch das mindestens eine Reinigungsgerät (20, 112) erfassbar sind, definiert ist.
11. Reinigungssystem nach Satz 9 oder 10, dadurch gekennzeichnet, dass das mindestens eine Reinigungsgerät (20, 112)die Speichereinheit (78) umfasst und/oder dass eine extern zum mindestens einen Reinigungsgerät (20, 112) angeordnete Speichereinheit (58) vorgesehen ist, wobei das mindestens eine Reinigungsgerät (20, 112) mit der externen Speichereinheit (58) in Kommunikation steht.
12. Reinigungssystem nach einem der Sätze 9 bis 11, dadurch gekennzeichnet, dass die Position des mindestens einen Reinigungsgerätes (20, 112) im Raum (12) mit einer Genauigkeit von weniger als 1m bestimmbar ist, vorzugsweise weniger als 50cm, noch bevorzugter von weniger als 25cm.
13. Reinigungssystem nach einem der Sätze 9 bis 12, dadurch gekennzeichnet, dass eine vom Benutzer (18) mit dem mindestens einen Reinigungsgerät (20, 112) zurückgelegte Strecke oder überstrichene Fläche innerhalb des Raumes (12) ermittelbar ist und bei Überschreiten einer vorgegebenen oder vorgebbaren Strecke oder Fläche ein Hinweis für den Benutzer an der Hinweiseinheit (68) ausgebbar ist, das Reinigungselement (42, 122) am mindestens einen Reinigungsgerät (20, 112) auszutauschen.
14. Reinigungssystem nach einem der Sätze 9 bis 13, dadurch gekennzeichnet, dass ein Wechseln des Benutzers (18) mit dem mindestens einen Reinigungsgerät (20, 112) von einem ersten Raumbereich (98) in einen von diesem unterscheidbaren zweiten Raumbereich (100) eines Raumes (124) feststellbar ist und dass bei positiver Feststellung ein Hinweis für den Benutzer (18) an der Hinweiseinheit (68) ausgebbar ist, das Reinigungselement (42, 122) am mindestens einen Reinigungsgerät (20, 112) auszutauschen.
15. Reinigungssystem nach einem der voranstehenden Sätze, dadurch gekennzeichnet, dass die Lokalisierungseinrichtung (48) Lokalisierungselemente (50) aufweist, wobei einem jeweiligen Raum (12) mindestens ein Lokalisierungselement (50) zugeordnet oder zuordenbar ist, zum Erfassen der Anwesenheit des mindestens einen Reinigungsgerätes (20, 112) im Raum (12), und eine mit diesen gekoppelte Datenverarbeitungseinheit (56) extern zum mindestens einen Reinigungsgerät (20, 112).
16. Reinigungssystem nach Satz 15, dadurch gekennzeichnet, dass von der Datenverarbeitungseinheit (56) anhand der Daten der Lokalisierungselemente (50) feststellbar ist, dass der Benutzer (18) mit dem mindestens einen Reinigungsgerät (20, 112) von einem Raum (12) in einen weiteren Raum (12) wechselt oder gewechselt ist, und ein diesbezügliches Raumwechselsignal an die Hinweiseinheit (68) oder an das mindestens eine Reinigungsgerät (20, 112) übertragbar ist.
17. Reinigungssystem nach Satz 15 oder 16, dadurch gekennzeichnet, dass von der Datenverarbeitungseinheit (56) eine Positionsinformation basierend auf den Daten der Lokalisierungselemente (50) ermittelbar und an das mindestens eine Reinigungsgerät (20, 112) übertragbar ist, wobei in einer Steuereinheit (66) des mindestens einen Reinigungsgerätes (20, 112) feststellbar ist, dass der Benutzer (18) mit dem mindestens einen Reinigungsgerät (20, 112) von einem Raum (12) in einen weiteren Raum (12) wechselt oder gewechselt ist.
18. Reinigungssystem nach einem der Sätze 15 bis 17, dadurch gekennzeichnet, dass die Lokalisierungselemente (50) Funkelemente sind, die mit einem Sende- und/oder Empfangselement (54) des mindestens einen Reinigungsgerätes (20, 112) zusammenwirken.
19. Reinigungssystem nach einem der Sätze 15 bis 18, dadurch gekennzeichnet, dass die Lokalisierungselemente (50) Kameras, Ultraschallelemente und/oder Infrarotelemente sind oder umfassen.
20. Reinigungssystem nach einem der voranstehenden Sätze, dadurch gekennzeichnet, dass die Lokalisierungseinrichtung (48) eine Sensoreinheit (132; 152) im mindestens einen Reinigungsgerät (20, 112) umfasst, mit der Positionslandmarken (134; 154) erfassbar sind, wobei einem jeweiligen Raum mindestens eine Positionslandmarke (134; 154) zugeordnet ist, wobei von einer mit der Sensoreinheit (132; 152) gekoppelten Steuereinheit (66) des mindestens einen Reinigungsgerätes (20, 112) anhand der erfassten Positionslandmarken (134; 154) feststellbar ist, dass der Benutzer (18) mit dem mindestens einen Reinigungsgerät (20, 112) von einem Raum (12) in einen weiteren Raum (12) wechselt oder gewechselt ist.
21. Reinigungssystem nach Satz 20, dadurch gekennzeichnet, dass die Sensoreinheit (152) eine Nahbereichserfassungseinheit ist oder bildet, die mit den Positionslandmarken (154) nur zusammenwirkt, wenn der Abstand des mindestens einen Reinigungsgerätes (20, 112) geringer ist als ein Schwellenabstand.
22. Reinigungssystem nach Satz 20 oder 21, dadurch gekennzeichnet, dass die Positionslandmarken (134; 154) an oder im Bereich von Übergängen (16), beispielsweise Türen oder Schwellen, zwischen aneinander grenzenden Räumen (12) positioniert oder positionierbar sind.
23. Reinigungssystem nach einem der Sätze 20 bis 22, dadurch gekennzeichnet, dass die Sensoreinheit (132; 152) eine Funk-Sensoreinheit (132; 152) ist und dass die Positionslandmarken (134; 154) vorzugsweise zumindest eines der Folgenden sind oder umfassen:
   - Bluetooth-Landmarken;
   - UWB-Landmarken;
   - RFID-Landmarken.
24. Reinigungssystem nach einem der Sätze 20 bis 23, dadurch gekennzeichnet, dass die Sensoreinheit (132; 152) eine optische Sensoreinheit (132; 152) ist und/oder eine magnetische Sensoreinheit (132; 152) zum optischen/magnetischen Erfassen der Positionslandmarken (134; 154).
25. Reinigungssystem nach einem der voranstehenden Sätze, dadurch gekennzeichnet, dass die Lokalisierungseinrichtung (48) eine Sensoreinheit im mindestens einen Reinigungsgerät (20, 112) umfasst zum Bereitstellen einer absoluten Positionsinformation und darauf basierender Ermittlung der Position des mindestens einen Reinigungsgerätes (20, 112) durch eine Steuereinheit (66), wobei in einer Speichereinheit (58, 78) des Reinigungssystems (10; 130; 150) Informationen über die Räume (12) mit absoluter Positionsinformation hinterlegt sind, insbesondere mittels einer Karte.
26. Reinigungssystem nach einem der voranstehenden Sätze, dadurch gekennzeichnet, dass das Reinigungssystem (10; 130; 150) mindestens eine Sensoreinheit (80) umfasst zum Erfassen, dass ein Reinigungselement (42, 122) am mindestens einen Reinigungsgerät (20, 112) angebracht ist oder angebracht wird, wobei insbesondere ein Austausch eines Reinigungselementes (42, 122) gegen ein weiteres Reinigungselement (42, 122) erkennbar ist.
27. Reinigungssystem nach Satz 26, dadurch gekennzeichnet, dass das mindestens eine Reinigungsgerät (20, 112) die mindestens eine Sensoreinheit (80) umfasst, vorzugsweise dass ein jeweiliges Reinigungsgerät (20, 112) eine Sensoreinheit (80) umfasst.
28. Reinigungssystem nach Satz 26 oder 27, dadurch gekennzeichnet, dass mit der Sensoreinheit (80) anhand der Masse und/oder anhand einer Feuchte des Reinigungselementes (42, 122) ein Tausch des Reinigungselementes (42, 122) erkennbar ist.
29. Reinigungssystem nach einem der Sätze 26 bis 28, dadurch gekennzeichnet, dass die Sensoreinheit (80) eine Funk-Sensoreinheit (80) ist und dass die Reinigungselemente (42, 122) auf Basis einer RFID-Technologie erkennbar sind, wobei die Reinigungselemente (42, 122) jeweils ein von der Sensoreinheit (80) erkennbares Funkglied (82) aufweisen.
30. Reinigungssystem nach einem der Sätze 26 bis 29, dadurch gekennzeichnet, das in einem Speicherglied (84) eines jeweiligen Reinigungselementes (42, 122) eine diesem zugeordnete Identifikationsnummer hinterlegt ist und dass in einer mit der mindestens einen Sensoreinheit (80) gekoppelten Speichereinheit (58, 78) des Reinigungssystems (10; 130; 150) Informationen über die Reinigungselemente (42, 122) anhand deren Identifikationsnummern unterscheidbar gespeichert sind.
31. Reinigungssystem nach Satz 30, dadurch gekennzeichnet, dass eine extern zum mindestens einen Reinigungsgerät (20, 112) angeordnete Speichereinheit (58) vorgesehen ist und/oder dass ein jeweiliges Reinigungsgerät (20, 112) eine Speichereinheit (78) umfasst, deren Inhalt vorzugsweise mit einer externen Speichereinheit (58) synchronisierbar ist.
32. Reinigungssystem nach Satz 30 oder 31, dadurch gekennzeichnet, dass im Speicherglied (84) und/oder in der Speichereinheit (58, 78) ein Benutzungszustand des jeweiligen Reinigungselementes (42, 122) hinterlegt ist und dass feststellbar ist, ob das Reinigungselement (42, 122) unbenutzt ist, wobei ein Hinweis an der Hinweiseinheit (68) an den Benutzer (18) betreffend den Benutzungszustand bereitstellbar ist.
33. Reinigungssystem nach Satz 32, dadurch gekennzeichnet, dass bei einer Feststellung, dass das Reinigungselement (42, 122) benutzt ist, ein Hinweis an der Hinweiseinheit (68) ausgebbar ist, das Reinigungselement (42, 122) zu tauschen.
34. Reinigungssystem nach Satz 32 oder 33, dadurch gekennzeichnet, dass bei einer Feststellung, dass das Reinigungselement (42, 122) unbenutzt ist, ein Hinweis an der Hinweiseinheit (68) ausgebbar ist, dass das mindestens eine Reinigungsgerät (20, 112) bereit für die Reinigung ist.
35. Reinigungssystem nach einem der Sätze 32 bis 34, dadurch gekennzeichnet, dass an die Speichereinheit (58, 78) bei Benutzung des Reinigungselementes (42, 122) eine Information betreffend den Benutzungszustand übermittelbar und mit der Identifikationsnummer des Reinigungselementes (42, 122) verknüpft speicherbar ist, dass das Reinigungselement (42, 122) benutzt wurde.
36. Reinigungssystem nach einem der Sätze 32 bis 35, dadurch gekennzeichnet, dass von der mindestens einen Sensoreinheit (80) der Benutzungszustand im Speicherglied (84) dahingehend änderbar ist, dass das Reinigungselement (42, 122) benutzt wurde.
37. Reinigungssystem nach einem der Sätze 32 bis 36, dadurch gekennzeichnet, dass das Reinigungssystem (10; 130; 150) eine Reinigungseinrichtung (106) zum Reinigen der Reinigungselemente (42, 122) umfasst und dass im Speicherglied (84) und/oder in der Speichereinheit (58, 78) der Benutzungszustand infolge einer Reinigung der Reinigungselemente (42, 122) dahingehend änderbar ist, dass diese als unbenutzt gekennzeichnet werden.
38. Reinigungssystem nach einem der Sätze 26 bis 37, gekennzeichnet durch eine Steuereinheit (66) im mindestens einen Reinigungsgerät (20, 112) und/oder durch eine extern zum mindestens einen Reinigungsgerät (20, 112) angeordnete Datenverarbeitungseinheit (54) zum Feststellen, dass ein Reinigungselement (42, 122) am mindestens einen Reinigungsgerät (20, 112) angebracht wurde, zum Identifizieren des Reinigungselementes (42, 122) anhand der im Speicherglied (84)oder in der Speichereinheit (58, 78) hinterlegten Informationen, zum Ansteuern der Hinweiseinheit (68) und/oder zum Auslösen der Änderung des Benutzungszustandes.
39. Reinigungssystem nach einem der voranstehenden Sätze, dadurch gekennzeichnet, dass die Nutzungsdauer ermittelbar ist, für welche ein Reinigungselement (42, 122) mit dem mindestens einen Reinigungsgerät (20, 112) benutzt wurde.
40. Reinigungssystem nach Satz 39, dadurch gekennzeichnet, dass die Nutzungsdauer beginnend mit dem Anbringen des Reinigungselementes (42, 122) am mindestens einen Reinigungsgerät (20, 112) und endend mit einem der Folgenden ermittelbar ist:
   - Erreichen einer vorgegebenen oder vorgebbaren Zeitdauer; oder
   - Feststellen, dass der Benutzer (18) mit dem mindestens einen Reinigungsgerät (20, 112) von einem Raum (12) in einen weiteren Raum (12) wechselt oder gewechselt ist.
41. Reinigungssystem nach Satz 39 oder 40, dadurch gekennzeichnet, dass bei Erreichen der vorgegebenen oder vorgebbaren Nutzungsdauer an der Hinweiseinheit (68) ein Hinweis für den Benutzer (18) bereitstellbar ist, das Reinigungselement (42, 122) am mindestens einen Reinigungsgerät (20, 112) zu tauschen.
42. Reinigungssystem nach einem der Sätze 26 bis 41, dadurch gekennzeichnet, dass das Reinigungssystem (10; 130; 150) eine Datenverarbeitungseinheit (56) umfasst zum Ermitteln, welche Räume (12) der Benutzer (18) mit dem mindestens einen Reinigungsgerät (20, 112) aufgesucht hat und/oder zum Ermitteln, dass oder ob der Benutzer (18) das Reinigungselement (42, 122) beim Wechseln von Raum (12) zu Raum (12) jeweils ausgetauscht hat.
43. Reinigungssystem nach Satz 42, dadurch gekennzeichnet, dass von der Datenverarbeitungseinheit (56) ein Bericht (108) erstellbar ist, umfassend Informationen über das Ergebnis der Ermittlung, insbesondere eine Information über erfolgten oder ausgebliebenen Tausch der Reinigungselemente (42, 122) auf einen oder ohne einen entsprechenden Hinweis und/oder Information über erfolgte oder ausgebliebene Reinigung.
44. Reinigungssystem nach Satz 43, dadurch gekennzeichnet, dass die Position des mindestens einen Reinigungsgerätes (20, 112) von der Lokalisierungseinrichtung (48) in drei Dimensionen ermittelbar ist und dass im Falle der Feststellung, welche Räume (12) der Benutzer (18) mit dem mindestens einen Reinigungsgerät (20, 112) aufgesucht hat, der Bericht (108) eine Höheninformation umfasst.
45. Reinigungssystem nach Satz 43 oder 44, dadurch gekennzeichnet, dass der Bericht (108) zumindest eines der Folgenden umfasst:
   - Informationen über Hinweise, Reinigungselemente (42, 122) zu tauschen, vorzugsweise in Verbindung mit einer Zeit- und/oder Ortsangabe des mindestens einen Reinigungsgerätes (20, 112);
   - eine Nutzungsdauer eines jeweiligen Reinigungselementes (42, 122);
   - einen Zeitpunkt des Tausches des jeweiligen Reinigungselementes (42, 122);
   - eine Angabe über die in einem jeweiligen Raum (12) mit dem mindestens einen Reinigungsgerät (20, 112) überstrichene Fläche;
   - eine Aufenthaltsdauer des mindestens einen Reinigungsgerätes (20, 112) in einem jeweiligen Raum.
46. Reinigungssystem nach einem der Sätze 43 bis 45, dadurch gekennzeichnet, dass der Bericht (108) von der Datenverarbeitungseinheit (54) an mindestens ein externes Zusatzgerät (110) übertragbar ist, insbesondere an ein tragbares Zusatzgerät (110).
47. Reinigungssystem nach einem der Sätze 42 bis 46, dadurch gekennzeichnet, dass das Ergebnis der Ermittlung auf Übereinstimmung mit einem vorgegebenen oder vorgebbaren Reinigungsplan überprüfbar ist, wobei im Falle fehlender Übereinstimmung ein Hinweis an eine Bedienperson ausgebbar ist.
48. Reinigungssystem nach einem der voranstehenden Sätze, dadurch gekennzeichnet, dass das Reinigungssystem (10; 130; 150) eine Mehrzahl von vom Reinigungssystem (10; 130; 150) unterscheidbaren Reinigungsgeräten (20, 112) umfasst.
49. Verfahren zur Reinigung von Flächen und insbesondere Böden von Räumen mit einem Reinigungssystem, das mindestens ein von einem Benutzer handgeführtes

Reinigungsgerät und mehrere Reinigungselemente umfasst, wobei an dem mindestens einen Reinigungsgerät ein Reinigungselement austauschbar halterbar ist, bei welchem Verfahren festgestellt wird, dass der Benutzer mit dem mindestens einen Reinigungsgerät von einem Raum in einen anderen Raum mit dem mindestens einen Reinigungsgerät wechselt oder gewechselt ist, und bei dem bei dem ein Hinweis bereitgestellt wird, das Reinigungselement auszutauschen.

### Bezugszeichentabelle:

- 10: Reinigungssystem
- 12: Raum
- 221: Raum
- 222: Raum
- 223: Raum
- 224: Raum
- 16: Übergang
- 18: Benutzer
- 20: Reinigungsgerät
- 24: Boden
- 26: Flachwischer
- 28: Griffelement
- 30: Stiel
- 32: Halteeinheit
- 34: Gelenkeinheit
- 36: Abschnitt
- 38: Abschnitt
- 40: Lösemechanismus
- 42: Reinigungselement
- 44: Wischbezug
- 46: Rollwagen
- 48: Lokalisierungseinrichtung
- 50: Lokalisierungselement
- 54: Sende- und/oder Empfangselement
- 56: Datenverarbeitungseinheit
- 58: Speichereinheit
- 60: Kommunikationselement
- 62: Kommunikationselement
- 64: Kommunikationsnetz
- 66: Steuereinheit
- 68: Hinweiseinheit
- 70: Anzeigeeinheit
- 72: Geräuscheinheit
- 74: Vibrationseinheit
- 76: Vibrationsbereich
- 78: Speichereinheit
- 80: Sensoreinheit
- 82: RFID-Tag
- 84: Speicherglied
- 86: Verfahrensschritt
- 88: Verfahrensschritt
- 90: Verfahrensschritt
- 92: Verfahrensschritt
- 94: Verfahrensschritt
- 96: Verfahrensschritt
- 98: Raumbereich
- 100: Raumbereich
- 102: Verfahrensschritt
- 104: Verfahrensschritt
- 106: Reinigungseinrichtung
- 108: Bericht
- 110: Zusatzgerät
- 112: Reinigungsgerät
- 114: Wischmopp
- 116: Griffelement
- 118: Stiel
- 120: Halteeinheit
- 122: Reinigungselement
- 124: Wischkopf
- 130: Reinigungssystem
- 132: Sensoreinheit
- 134: Positionslandmarke
- 150: Reinigungssystem
- 152: Sensoreinheit
- 154: Positionslandmarke

## Patentansprüche

1. Reinigungssystem zur Reinigung von Flächen und insbesondere Böden von Räumen, umfassend mindestens ein von einem Benutzer (18) handgeführtes Reinigungsgerät (20, 112) und mehrere Reinigungselemente (42, 122), wobei an dem mindestens einen Reinigungsgerät (20, 112) ein Reinigungselement (42, 122) austauschbar halterbar ist, eine Lokalisierungseinrichtung (48) zum Feststellen, wenn der Benutzer (18) mit dem mindestens einen Reinigungsgerät (20, 112) von einem Raum (12) in einen weiteren Raum (12) wechselt oder gewechselt ist, und eine mit dieser gekoppelte Hinweiseinheit (68) zum Bereitstellen eines Hinweises für den Benutzer (18), das Reinigungselement (42, 122) am mindestens einen Reinigungsgerät (20, 112) auszutauschen.

2. Reinigungssystem nach Anspruch 1, **dadurch gekennzeichnet, dass** das mindestens eine Reinigungsgerät (20) ein Flachwischer (26) ist und die Reinigungselemente (42) Wischbezüge (44) für den Flachwischer (26) sind oder dass das mindestens eine Reinigungsgerät (112) ein Wischmopp (114) ist und die Reinigungselemente (122) Wischköpfe (124) für den Wischmopp (114) sind.

3. Reinigungssystem nach Anspruch 1 oder 2, **dadurch gekennzeichnet, dass** das mindestens eine Reinigungsgerät (20, 112) die Hinweiseinheit (68) umfasst.

4. Reinigungssystem nach einem der voranstehenden Ansprüche, **dadurch gekennzeichnet, dass** die Hinweiseinheit (68) zumindest eines der Folgenden umfasst oder nach einem der Folgenden ausgestaltet ist:
- eine Anzeigeeinheit (70) zum Ausgeben eines optischen Hinweises;
- eine Geräuscheinheit (72) zum Ausgeben eines akustischen Hinweises;
- eine Vibrationseinheit (74) zum Ausgeben eines haptischen Hinweises, insbesondere durch Vibration eines Griffelementes (28) des mindestens einen Reinigungsgerätes (20, 112).

5. Reinigungssystem nach einem der voranstehenden Ansprüche, **dadurch gekennzeichnet, dass** das mindestens eine Reinigungsgerät (20, 112) eine Halteeinheit (30, 120) zum Haltern des Reinigungselementes (42, 122) am Reinigungsgerät (20, 112) umfasst und dass die Halteeinheit (32, 120) die Hinweiseinheit (68) ausbildet, wobei die Halteeinheit (32, 120) als Hinweis zum Freigeben des Reinigungselementes (42, 122) ansteuerbar ist.

6. Reinigungssystem nach einem der voranstehenden Ansprüche, **dadurch gekennzeichnet, dass** das mindestens eine Reinigungsgerät (20) ein Griffelement (28), eine Halteeinheit (32) zum Haltern des Reinigungselementes (42) und eine diese verbindende Gelenkeinheit (34) aufweist und dass die Gelenkeinheit (34) die Hinweiseinheit (68) ausbildet, wobei die Gelenkeinheit (34) als Hinweis zum Blockieren ansteuerbar ist.

7. Reinigungssystem nach einem der voranstehenden Ansprüche, **dadurch gekennzeichnet, dass** der Hinweis erst nach Ablauf einer vorgegebenen oder vorgebbaren Zeitverzögerung der Feststellung bereitstellbar ist oder dass der Hinweis erst bereitstellbar ist, wenn der Benutzer (18) für eine vorgegebene oder vorgebbare Zeitdauer in den weiteren Raum (12) gewechselt ist.

8. Reinigungssystem nach einem der voranstehenden Ansprüche, **dadurch gekennzeichnet, dass** mittels der Lokalisierungseinrichtung (48) die Anwesenheit des mindestens einen Reinigungsgerätes (20, 112) in einem jeweiligen Raum (12) ermittelbar ist.

9. Reinigungssystem nach einem der voranstehenden Ansprüche, **dadurch gekennzeichnet, dass** mittels der Lokalisierungseinrichtung (48) die Position des mindestens einen Reinigungsgerätes (20, 112) innerhalb zumindest eines bestimmbaren Raumes (12) und vorzugsweise innerhalb eines beliebigen der Räume (12) ermittelbar ist, wobei in einer Speichereinheit (58, 78) des Reinigungssystems (10; 130) Informationen über die Räume (12) hinterlegt sind, insbesondere mittels einer Karte, in welcher die Position des mindestens einen Reinigungsgerätes (20, 112) ermittelbar ist.

10. Reinigungssystem nach Anspruch 9, **dadurch gekennzeichnet, dass** eine vom Benutzer (18) mit dem mindestens einen Reinigungsgerät (20, 112) zurückgelegte Strecke oder überstrichene Fläche innerhalb des Raumes (12) ermittelbar ist und bei Überschreiten einer vorgegebenen oder vorgebbaren Strecke oder Fläche ein Hinweis für den Benutzer an der Hinweiseinheit (68) ausgebbar ist, das Reinigungselement (42, 122) am mindestens einen Reinigungsgerät (20, 112) auszutauschen.

11. Reinigungssystem nach einem der voranstehenden Ansprüche, **dadurch gekennzeichnet, dass** die Lokalisierungseinrichtung (48) Lokalisierungselemente (50) aufweist, wobei einem jeweiligen Raum (12) mindestens ein Lokalisierungselement (50) zugeordnet oder zuordenbar ist, zum Erfassen der Anwesenheit des mindestens einen Reinigungsgerätes (20, 112) im Raum (12), und eine mit diesen gekoppelte Datenverarbeitungseinheit (56) extern zum mindestens einen Reinigungsgerät (20, 112).

12. Reinigungssystem nach einem der voranstehenden Ansprüche, **dadurch gekennzeichnet, dass** die Lokalisierungseinrichtung (48) eine Sensoreinheit (132; 152) im mindestens einen Reinigungsgerät (20, 112) umfasst, mit der Positionslandmarken (134; 154) erfassbar sind, wobei einem jeweiligen Raum mindestens eine Positionslandmarke (134; 154) zugeordnet ist, wobei von einer mit der Sensoreinheit (132; 152) gekoppelten Steuereinheit (66) des mindestens einen Reinigungsgerätes (20, 112) anhand der erfassten Positionslandmarken (134; 154) feststellbar ist, dass der Benutzer (18) mit dem mindestens einen Reinigungsgerät (20, 112) von einem Raum (12) in einen weiteren Raum (12) wechselt oder gewechselt ist.

13. Reinigungssystem nach Anspruch 12, **dadurch gekennzeichnet, dass** die Positionslandmarken (134; 154) an oder im Bereich von Übergängen (16), beispielsweise Türen oder Schwellen, zwischen aneinander grenzenden Räumen (12) positioniert oder positionierbar sind.

14. Reinigungssystem nach einem der voranstehenden Ansprüche, **dadurch gekennzeichnet, dass** die Lokalisierungseinrichtung (48) eine Sensoreinheit im mindestens einen Reinigungsgerät (20, 112) umfasst zum Bereitstellen einer absoluten Positionsinformation und darauf basierender Ermittlung der Position des mindestens einen Reinigungsgerätes (20, 112) durch eine Steuereinheit (66), wobei in einer Speichereinheit (58, 78) des Reinigungssystems (10; 130; 150) Informationen über die Räume (12) mit absoluter Positionsinformation hinterlegt sind, insbesondere mittels einer Karte.

15. Reinigungssystem nach einem der voranstehenden Ansprüche, **dadurch gekennzeichnet, dass** das Reinigungssystem (10; 130; 150) mindestens eine Sensoreinheit (80) umfasst zum Erfassen, dass ein Reinigungselement (42, 122) am mindestens einen Reinigungsgerät (20, 112) angebracht ist oder angebracht wird, wobei insbesondere ein Austausch eines Reinigungselementes (42, 122) gegen ein weiteres Reinigungselement (42, 122) erkennbar ist.

16. Reinigungssystem nach Anspruch 15, **dadurch gekennzeichnet, dass** mit der Sensoreinheit (80) anhand der Masse und/oder anhand einer Feuchte des Reinigungselementes (42, 122) ein Tausch des Reinigungselementes (42, 122) erkennbar ist.

17. Reinigungssystem nach einem der voranstehenden Ansprüche, **dadurch gekennzeichnet, dass** die Nutzungsdauer ermittelbar ist, für welche ein Reinigungselement (42, 122) mit dem mindestens einen Reinigungsgerät (20, 112) benutzt wurde.

18. Reinigungssystem nach einem der voranstehenden Ansprüche, **dadurch gekennzeichnet, dass** das Reinigungssystem (10; 130; 150) eine Mehrzahl von vom Reinigungssystem (10; 130; 150) unterscheidbaren Reinigungsgeräten (20, 112) umfasst.

19. Verfahren zur Reinigung von Flächen und insbesondere Böden von Räumen mit einem Reinigungssystem, das mindestens ein von einem Benutzer handgeführtes Reinigungsgerät und mehrere Reinigungselemente umfasst, wobei an dem mindestens einen Reinigungsgerät ein Reinigungselement austauschbar halterbar ist, bei welchem Verfahren festgestellt wird, dass der Benutzer mit dem mindestens einen Reinigungsgerät von einem Raum in einen anderen Raum mit dem mindestens einen Reinigungsgerät wechselt oder gewechselt ist, und bei dem bei dem ein Hinweis bereitgestellt wird, das Reinigungselement auszutauschen.
